# EUROPÄISCHE PATENTSCHRIFT

(11) **EP 4 000 761 B1**
(45) Veröffentlichungstag und Bekanntmachung des Hinweises auf die Patenterteilung: **24.07.2024**
(21) Anmeldenummer: 20208809.2
(22) Anmeldetag: 20.11.2020
(51) Int. Cl.: B22D 11/16, B22D 11/20, B22D 11/128, G01B 11/245, G01B 11/25, G01P 3/38

(54) **BERÜHRUNGSLOSE VERMESSUNG VON METALLSTRÄNGEN AN EINER STRANGGIESSANLAGE**
CONTACTLESS MEASURING OF METAL STRANDS IN A CONTINUOUS CASTING PLANT
MESURE SANS CONTACT DES BARRES MÉTALLIQUES SUR UNE INSTALLATION DE COULÉE CONTINUE

(43) Veröffentlichungstag der Anmeldung: 25.05.2022
(73) Patentinhaber: Primetals Technologies Austria GmbH, 4031 Linz (AT)
(72) Erfinder: Ott, Daniel, 4040 Linz (AT); Hlobil, Helmut, 4491 Niederneukirchen (AT); Lang, Oliver, 4407 Dietach (AT)
(74) Vertreter: Metals@Linz

(56) Entgegenhaltungen:
- WO-A1-98/53327
- JP-A- 2003 260 551
- US-A- 4 334 779
- US-B2- 8 548 268

## Beschreibung

Die Erfindung betrifft eine Vorrichtung und ein Verfahren zum berührungslosen Vermessen von Metallsträngen, insbesondere von Metallsträngen im Knüppel- oder Vorblockformat, an einer Stranggießanlage.

In Stranggießanlagen wird flüssige metallische Schmelze in eine gekühlte Kokille, in der die Erstarrung der Schmelze beginnt, gefördert. Beim Durchtritt durch die Kokille erstarren an die Innenwandung der Kokille angrenzende Bereiche der Schmelze zu einer sogenannten Strangschale, die einen noch flüssigen Metallkern umschließt. Aus der Kokille wird ein teilerstarrter Metallstrang mit einer Strangschale ausgefördert, der weiter abgekühlt wird. Üblicherweise ist die Kokille im Wesentlichen vertikal orientiert, sodass die flüssige Metallschmelze am oberen, höher gelegenen Ende der Kokille eingebracht und der teilerstarrte Metallstrang am unteren, tiefer gelegenen Ende der Kokille ausgefördert wird. Dabei wird die Kokille periodisch entlang der Gießrichtung oszilliert, um ein Anhaften der sich ausbildenden Strangschale an der Innenwandung der Kokille zu vermeiden.

Unmittelbar nach dem Austritt aus der Kokille wird der noch weiche Metallstrang mechanisch - beispielsweise mittels Strangführungsrollen - gestützt und gleichzeitig seine Bewegung in eine im Wesentlichen waagrechte Richtung umgelenkt. Die Rollen zur mechanischen Führung und Stützung des Metallstranges sind in der Regel entlang eines Kreisbogensegments angeordnet, dessen Radius auch als Gießbogenradius bezeichnet wird. Typische Werte für den Gießbogenradius liegen im Bereich von 6 bis 12 Metern. Die Rollen in ihrer Gesamtheit werden auch als 'Gießbogen' bezeichnet. Weiterhin können zwischen den Strangführungsrollen Kühlvorrichtungen angeordnet sein, die den Abkühlvorgang des Metallstranges unterstützen. Zusätzlich können manche der Rollen des Gießbogens als sogenannte Treiberrollen ausgestaltet sein, die eine von der Kokille wegführende und tangential zum Gießbogen verlaufende Kraftkomponente auf den Metallstrang ausüben und diesen dadurch bei der Ausförderung aus der Stranggießanlage unterstützen.

Zumeist erfolgt der Gießvorgang im sogenannten Endlosbetrieb, wobei permanent flüssige Metallschmelze in die Kokille eingebracht wird, sodass der aus der Kokille austretende Metallstrang im prinzipiell eine beliebige Länge erreichen kann. Dementsprechend wird der Abschnitt des Metallstranges, der sich zwischen Kokille und einer der Gießanlage nachgeordneten Trennvorrichtung erstreckt, als Endlosstrang bezeichnet. Weiterhin wird unter der Produktionsrichtung X der Stranggießanlage jene Raumrichtung verstanden, welche mit der Bewegungsrichtung des produzierten Metallstranges in einem dem Gießbogen nachgeordneten Auslaufbereich der Stranggießanlage übereinstimmt, wobei die Produktionsrichtung X im Wesentlichen in horizontaler Richtung verläuft.

Folglich wird ein Metallstrang nach dem Verlassen des Gießbogens geradlinig in Produktionsrichtung X mit Hilfe einer Transportvorrichtung (z.B. einem Rollgang) in dem Auslaufbereich der Stranggießanlage weitergeführt und aus der Stranggießanlage ausgefördert. Hierfür können gegebenenfalls auch weitere, dem Gießbogen nachgeordnete Treiberrollen zum Einsatz kommen.

Mittels einer dem Gießbogen nachgeordneten Trennvorrichtung, welche ebenfalls im Auslaufbereich der Gießanlage angeordnet ist, wird der Metallstrang in einzelne Stücke mit einer gewünschten Länge unterteilt. Dabei erfolgt die Unterteilung quer zur Produktionsrichtung X. Dementsprechend wird eine Raumrichtung, die in horizontaler Richtung (d.h. senkrecht zur Schwerkraft) und senkrecht zur Produktionsrichtung X verläuft, im Folgenden als Querrichtung Y der Stranggießanlage bezeichnet. Weiterhin wird eine Raumrichtung, die senkrecht zur Produktionsrichtung X und senkrecht zur Querrichtung Y verläuft, als Höhenrichtung Z der Stranggießanlage bezeichnet, da sie in der Regel im Wesentlichen vertikal in Richtung der Schwerkraft orientiert ist. Folglich sind die Produktionsrichtung X, die Querrichtung Y und die Höhenrichtung Z jeweils orthogonal zueinander orientiert und werden im Folgenden wahlweise auch als Raumrichtungen X, Y und Z bezeichnet.

Die Länge eines von einem Endlosstrang mittels einer Trennvorrichtung abgetrennten Abschnittes beträgt in der Regel mehrere Meter, beispielsweise 6 bis 25 Meter, und erstreckt sich entlang der im Weiteren als Längsrichtung X_{S} des Gießstranges bezeichneten Richtung, welche im Auslaufbereich der Stranggießanlage in Richtung der Produktionsrichtung X verläuft. Dementsprechend wird im Weiteren eine tangential entlang einer Oberfläche und normal zur Längsrichtung X_{S} des Metallstranges verlaufende Richtung als Umfangsrichtung des Metallstranges bezeichnet. Weiterhin wird als Gießquerschnitt eines Metallstranges die Schnittfläche durch einen Metallstrang in einer Ebene normal zu dessen Längsrichtung X_{S} bezeichnet.

Unter einem Metallstrang im 'Knüppel- bzw. Vorblockformat' - folgend einfach auch als 'Knüppel' bzw. 'Vorblock' (engl. 'bloom' bzw. 'billet') bezeichnet - wird im Folgenden ein Metallstrang bezeichnet, dessen Gießquerschnitt entweder eine rechteckige Form mit Abmessungen von 100mm bis 500mm je Seitenkante oder eine im Wesentlichen runde Form mit einem größten Durchmesser von bis zu 600mm aufweist. Dementsprechend wird eine Ebene, die parallel zur Produktionsrichtung X der Stranggießanlage durch den Mittelpunkt eines Gießquerschnittes eines Metallstranges verläuft die Ebene, die durch den Auslaufbereich definiert wird, in einem rechten Winkel schneidet, im Weiteren als eine vertikale Mittenebene ε_{M} durch den betreffenden Metallstrang bezeichnet.

In der Regel umfasst eine Stranggießanlage speziell für Gießstränge im Knüppel- oder Vorblockformat mehrere Gießvorrichtungen, denen jeweils eine eigene Kokille zugeordnet ist und die entlang einer Querrichtung Y parallel zueinander angeordnet sind. Eine mehrere Gießvorrichtungen umfassende Stranggießanlage weist dementsprechend mehrere vertikale Mittenebenen ε_{M} - nämlich eine Ebene durch jeden Gießstrang - auf.

In der Regel werden Knüppel mittels einer Rohrkokille, d.h. mit Hilfe einer einteilig ausgeführten Gießform, hergestellt. Vorblöcke werden entweder mit einer einteiligen oder mehrteiligen Kokille produziert. Brammenformate (gemeint sind Gießstränge mit einer größten Querschnittserstreckung von bis zu über 3400mm) werden mit Hilfe von mehrteiligen Plattenkokillen gegossen.

Von einer Gießanlage produzierte Metallstränge werden entweder an die nächste Verarbeitungsanlage (z.B. ein Walzwerk) oder direkt an einen Kunden weitergeleitet, wobei eine möglichst genaue Kenntnis ihres jeweiligen Produktionsgewichts angestrebt wird, das entweder aus dem Volumen des jeweiligen Gießstranges und dessen spezifischer Dichte, welche in der Regel mit ausreichender Genauigkeit bekannt ist, oder aus einer Wägung des Metallstranges ermittelt werden kann.

Für die Bestimmung einer Geschwindigkeit eines produzierten Gießstrangs im Auslaufbereich einer Stranggießanlage - und davon abgeleitet einer Länge des Gießstranges - sind Messverfahren nach dem Laser-Doppler-Prinzip mittels sogenannter Laser-Doppler-Velocimeter bekannt. Diese Verfahren basieren auf der Erzeugung eines Interferenzmusters am Messobjekt mit Hilfe von kohärentem Laserlicht, wobei eine Intensitätsmodulation des Interferenzmusters mit einer Frequenz, die proportional zur transversalen Geschwindigkeit des Messobjekts relativ zu dem Laser-Doppler-Velocimeter ist, erfasst wird. Diese Verfahren bieten zwar den Vorteil einer berührungslosen Messung, haben jedoch den Nachteil, dass die Ausdehnung des erzeugten Interferenzmusters im Bereich von nur wenigen Zehntelmillimetern liegt (Spotmessung). Weil jedoch für eine zeitlich durchgängige Messung eine dauerhafte, optisch einwandfreie Sichtlinie zu dem am Messobjekt erzeugten Interferenzmuster gewährleistet sein muss, erhöht sich im Falle einer auf dem Laser-Doppler-Prinzip basierenden Messung an heißen Metallsträngen die Fehleranfälligkeit, da die zu vermessenden Metallstränge nach dem Verlassen des Gießbogens eine Oberflächentemperatur von bis zu 1000°C aufweisen können, von einer unregelmäßigen Zunderschicht bedeckt sind und es weiterhin zu Dampf- und Staubentwicklung kommt. Zudem muss aufgrund der thermischen Belastung durch die Strahlungswärme ein Laser-Doppler-Velocimeter in erhöhtem Abstand von mindestens einem Meter zu einem heißen Metallstrang angeordnet werden, sodass beispielsweise druckluftbasierte Freiblasvorrichtungen für den optischen Strahlweg erforderlich sind und somit der Installationsaufwand entsprechend hoch ist.

So ist beispielsweise aus der US 4,334,779 A1 eine Vorrichtung in Form eines Zweistrahl-Laser-Doppler-Systems bekannt, bei dem sich zwei zueinander kohärente Laserstrahlen auf der Oberfläche eines sich tangential zur Vorrichtung bewegenden Objekts kreuzen. Dadurch wird auf der Oberfläche ein streifenförmiges Interferenzmuster erzeugt, das von einer Optik auf einen Fotodetektor abgebildet wird, der die Intensität des Interferenzmusters erfasst. Unregelmäßigkeiten auf der Oberfläche des bewegten Objekts modulieren den erfassten zeitlichen Intensitätsverlauf, der in weiterer Folge elektronisch gefiltert und in Impulse konvertiert wird, aus denen die Geschwindigkeit des Objekts bzw. dessen Länge in Bewegungsrichtung abgeleitet wird.

Auch die WO 98/53327 A1 offenbart ein System zur Messung der Geschwindigkeit eines bewegten, flachen Materialbandes, bei dem eine bevorzugt von einem Laser generierte Lichtlinie parallel zur Bewegungsrichtung des Materialbandes auf dessen Oberfläche projiziert wird. Dabei wird die Lichtlinie durch die Oberflächenstruktur des vorbeibewegten Materialbandes moduliert und mit Hilfe eines telezentrischen Objektivs auf eine Matrix aus Fotodetektoren abgebildet. Aus zwei zeitversetzt gewonnenen Einzelbildern wird mit Hilfe eines korrelativen Messverfahrens eine Geschwindigkeit des Materialbandes entlang der Richtung der Lichtlinie ermittelt.

Die US 8,548,268 B2 lehrt, die Geschwindigkeit eines aus einer Gießanlage austretenden, heißen Metallstranges auf Basis eines bildgebenden, korrelativen optischen Messverfahrens zu bestimmen. Zur Erfassung von Einzelbildern, die für das korrelative optische Messverfahren herangezogen werden, wird eine telezentrische Optik vorgeschlagen, bei der die Abmessung des erfasste Oberflächenbereichs des Metallstranges 48x36mm beträgt.

Bei einer Geschwindigkeitserfassung von Metallsträngen mittels Drehgebern in Treiberrollen des Gießbogens oder eines Rollganges wiederum handelt es sich nicht um ein berührungsloses Messverfahren, folglich stellt mechanischer Schlupf zwischen einer Treiberrolle bzw. einer Messrolle und der Oberfläche des zu vermessenden Gießstranges eine potentielle Fehlerquelle dar. Weiters verschleißt eine Treiber- bzw. Messrolle mit Fortdauer ihrer Einsatzzeit, wodurch die Messgenauigkeit verschlechtert wird.

Überdies ist in den meisten Fällen für eine ausreichend genaue Volumsbestimmung lediglich die Kenntnis der Längserstreckung eines Gießstranges alleine nicht ausreichend, da es produktionsbedingt zu Abweichungen von einer angestrebten Gießgeometrie (d.h. Abweichungen von einem angestrebten Gießquerschnitt oder von einer 'Geradlinigkeit' entlang der Längsrichtung X_{S}) des betreffenden Metallstranges kommen kann und daher das Volumen nicht mit ausreichender Genauigkeit aus den Abmessungen der zugeordneten Kokille bestimmt werden kann. Abweichungen von einer angestrebten Gießgeometrie des Metallstranges können z.B. durch ungleichmäßige Abkühl- und Erstarrungsvorgänge in der Strangschale und durch Verschleiß in der Kokille verursacht werden.

Für eine präzise genaue Volumenbestimmung und eine Klassifizierung in Bezug auf die Gießgeometrie eines produzierten Metallstranges müssen daher neben der Länge weitere sogenannte geometrische Qualitätsparameter erfasst werden, wie z.B. eine Abweichung von rechten Winkeln bei rechteckigen Gießformaten ('Rhomboidität') bzw. eine ovale Verformung bei runden Gießformaten, eine Vergrößerung des angestrebten Gießquerschnittes über bestimmte Längsabschnitte des Gießstranges ('Ausbauchung' bzw. 'Bulging'), eine Schlangenform des Gießstranges ('Snaking') oder durch abrupte Änderungen in der Ausfördergeschwindigkeit verursachte Oberflächenfehler ('Jerking'), die z.B. aufgrund suboptimaler Gleitreibungsverhältnisse zwischen Strangschale und Kokille in Verbindung mit der Kokillenoszillation) auftreten können.

Die genannten geometrischen Qualitätsparameter können jeweils innerhalb eines vorgegebenen Toleranzbereiches liegen, sodass der entsprechende Metallstrang an eine nachfolgende Verarbeitungsanlage oder an einen Kunden weitergeleitet werden kann. Bei außerhalb eines vorgegebenen Toleranzbereiches liegenden Abweichungen müssen die betreffenden Metallstränge jedoch entweder speziell behandelt (z.B. nachbehandelt oder wertmäßig deklassiert) oder gegebenenfalls zur Gänze verschrottet werden. Dies kann jedoch - ohne genaue Kenntnis der Geometrie eines Gießstranges - erst z.B. bei der Eingangskontrolle in einem nachfolgenden Walzwerk oder bei der Verladekontrolle vor dem Versenden des Walzprodukts an einen Kunden festgestellt werden. Weil solche Abweichungen zumeist auf eine bestimmte Ursache im Produktionsprozess der Gießanlage zurückgeführt werden können, besteht die Gefahr, dass bis zur Entdeckung eines derartigen Fehlers noch unnötig viele Tonnen an fehlerhaften Walzprodukten produziert werden.

Mittels auf Laserscannern basierenden Verfahren ist es zwar prinzipiell möglich, die Oberfläche eines zu vermessenden Objekts abzutasten und ein entsprechendes Oberflächenprofil zu erstellen. Jedoch basieren derartige Scanner auf einem Triangulationsverfahren und müssen daher in unmittelbarer Nähe (weniger als 1000mm) zum Messobjekt platziert werden. Jedoch kann eine Geschwindigkeit des Messobjekts mit einem Laserscanner selbst nicht ermittelt werden.

Zur Erfassung eines Oberflächenprofils sind auch sogenannte Lichtschnitt-Triangulationsverfahren beispielsweise aus der DE 44 31 922 A1 und der DE 103 09 544 A1 bekannt, bei denen geradlinig abgelenktes Laserlicht auf ein zu vermessendes Objekt gelenkt wird, wobei das an der Schnittlinie mit dem Objekt reflektierte Licht von einer Kamera erfasst und aus dem so entstandenen Abbild ein Profilschnitt entlang der Oberfläche des Objekts ermittelt wird. Allerdings ist das offenbarte Verfahren auf ein extern ermitteltes Geschwindigkeitssignal angewiesen.

Weiterhin offenbart WO 2011/076187 A1 einen Sensor und ein Verfahren zum optischen Messen eines Abstands, einer Position und/oder eines Profils eines Messobjekts, wobei das Messobjekt aufgrund seiner Temperatur elektromagnetische Strahlung im sichtbaren Wellenlängenbereich emittiert und wobei der Sensor eine Lichtquelle zum Beleuchten der Oberflache des Messobjekts und einen Detektor zum Detektieren des an dem Messobjekt reflektierten Lichts aus der Lichtquelle aufweist. Das durch die Lichtquelle erzeugte Licht weist eine Wellenlänge unterhalb des Maximums des von dem Messobjekt abgegebenen Planck'schen Strahlungsspektrum auf. Es wird weiterhin für die Beleuchtung des die Verwendung von kurzwelligem monochromatischem Laserlicht mit einer Wellenlänge kürzer als 450nm sowie ein dem Sensor vorgeschalteter optischer Schmalbandfilter vorgeschlagen, der nur in einem kleinen Wellenlängenbereich des visuellen elektromagnetischen Spektrums durchlässig ist, um die Detektierbarkeit des reflektierten Beleuchtungsstrahles zu erhöhen.

Die EP 2 603 338 B1 offenbart eine Sensordatenaufnahme von heißen Metallsträngen auf direktem oder indirektem optischem Weg mittels einer CMOS-basierten Kamera im nahen Infrarotbereich des elektromagnetischen Spektrums. Aus den aufgenommenen Sensordaten wird auf Fehlerstellen bzw. auf eine Abmessung eines erfassten Metallstranges rückgeschlossen. Es wird jedoch keine dreidimensionale Vermessung und insbesonders keine Projektion von Lichtmustern auf die Metallstränge offenbart.

Die DE 44 31 922 A1, DE 103 09 544 A1, WO 2011/076187 A1 und die EP 2 603 338 B1 offenbaren jedoch nicht, auch eine Geschwindigkeit eines Messobjekts - insbesondere berührungslos und mit hoher Genauigkeit - zu ermitteln. Folglich wäre eine präzise produktionsnahe Erfassung der geometrischen Abmessungen eines Metallstranges gemäß diesen Dokumenten nur unter technischem Mehraufwand möglich, da eine räumliche Verortung der einzelnen Profilschnitte auf einem Metallstrang mittels einer zusätzlichen Vorrichtung, die eine gegebenenfalls wechselnde Momentangeschwindigkeit des Metallstranges berücksichtigt, durchgeführt werden müsste.

Aus der JP 2003 260551 A ist ein System zur Breiten- und Dickenvermessung eines heißen, quaderförmigen, aus einer Gießanlage austretenden Metallstranges bekannt. Gemäß einem ersten Ausführungsbeispiel erfassen eine oberhalb und eine seitlich des Metallstranges angeordnete Kamera jeweils einen Teilbereich von dessen oberer bzw. seitlicher Oberfläche in zweidimensionalen Bildern, woraus mittels eines optischen Auswerteverfahren die Breite bzw. die Dicke des Metallstranges abgeleitet wird. Gemäß einem zweiten Ausführungsbeispiel ist eine bildgebende Kamera seitlich schräg oberhalb des Metallstranges angeordnet, wobei mittels einer flächigen Beleuchtung der Kontrast zwischen der oberen und dem seitlichen Quaderoberfläche erhöht wird.

Weiterhin sind zwar für eine direkte Gewichtsbestimmung von bereits auf die gewünschte Produktionslänge geschnittenen Knüppeln bzw. Vorblöcken Waagen bekannt, diese sind jedoch in der Anschaffung und besonders in der Wartung teuer, nur mit großem konstruktivem Aufwand in eine Stranggießanlage zu integrieren und bieten zudem nur eine begrenzte Genauigkeit. Überdies können Abweichungen der Gießgeometrie eines produzierten Metallstranges von Waagen nicht erfasst werden.

Für die Bestimmung der geometrischen Qualitätsparameter inklusive Länge und Gewicht ist zurzeit kein System für Metallstränge im Knüppel- oder Vorblockformat bekannt, das ausreichend zuverlässig arbeitet und mit einem geringen Investitionsvolumen realisierbar ist. Lediglich für größere Gießformate wie Brammen sind spezialisierte Systeme bekannt, die jedoch ein Investitionsvolumen in der Größenordnung von etwa 1 Million Euro benötigen und daher für Stranggießanlagen zur Herstellung von Knüppeln oder Vorblöcken nicht wirtschaftlich realisierbar sind.

Es ist daher eine Aufgabe der vorliegenden Erfindung, die Nachteile der vorgenannten Systeme zu überwinden und mit geringem Investitionsvolumen die geometrischen Abmessungen von Metallsträngen an einer Stranggießanlage, insbesondere von Knüppeln oder Vorblöcken, mit ausreichender Genauigkeit, ohne Verzögerung der Produktionsgeschwindigkeit und möglichst produktionsnahe zu erfassen, um einerseits das Produktionsgewicht möglichst genau ermitteln zu können und um andererseits Abweichungen von einer angestrebten Gießgeometrie möglichst frühzeitig und präzise bestimmen zu können, ohne den Stranggießprozess selbst zu beeinträchtigen.

Die Aufgabe wird erfindungsgemäß durch eine Vorrichtung mit den Merkmalen des Anspruchs 1 und einem Verfahren mit den Merkmalen des Anspruchs 7 gelöst.

Vorteilhafte Ausgestaltungen der Erfindung sind Gegenstand der Unteransprüche.

Eine erfindungsgemäße Vorrichtung zum berührungslosen Vermessen von zumindest einem, bevorzugt zumindest zwei sich entlang einer Produktionsrichtung X einer Stranggießanlage durch einen Auslaufbereich der Stranggießanlage bewegender Metallstränge, insbesondere im Knüppel- oder Vorblockformat, umfasst zumindest eine, bevorzugt zumindest zwei Projektionsvorrichtungen, zumindest einen, bevorzugt zumindest zwei Sensoren und eine Auswerteeinheit. Erfindungsgemäß ist die Vorrichtung dabei eingerichtet, zumindest einen, bevorzugt zumindest zwei Metallstränge gleichzeitig zu vermessen.

Die Projektionsvorrichtung ist dazu eingerichtet, zumindest ein, bevorzugt zumindest zwei Lichtmuster auf den zumindest einen Metallstrang zu projizieren. Die Projektionsvorrichtung kann beispielsweise in Querrichtung Y zwischen zwei Metallsträngen angeordnet werden. Im Falle mehrerer Metallstränge ist die Projektionsvorrichtung bevorzugt dazu eingerichtet, ein Lichtmuster auf zumindest zwei - beispielsweise in Querrichtung Y benachbarter - Metallstränge zu projizieren.

Der Sensor kann in einer Höhe h oberhalb des Auslaufbereichs angeordnet werden. Weiterhin ist der zumindest eine Sensor dazu eingerichtet, eine zeitliche Sequenz zweidimensionaler Bilder zu generieren und an die Auswerteeinheit zu übermitteln. Durch eine Anordnung des Sensors in einer Höhe h kann ein ausreichender Sicherheitsabstand zu einem heißen Metallstrang im Auslaufbereich gewährleistet werden. Unter einer zeitlichen Sequenz aus Bildern wird in diesem Zusammenhang eine Abfolge von Einzelbildern, die von dem betreffenden Sensor in zeitlicher Abfolge hintereinander erzeugt werden, verstanden. Eine derartige Sequenz ist nicht notwendigerweise zeitlich terminiert, es kann sich beispielsweise um einen permanenten Videostream handeln. Der zeitliche Versatz zwischen den Einzelbildern kann in einem Bereich von 1ms bis 1000ms, bevorzugt in einem Bereich von 50ms bis 100ms, liegen. Die Übermittlung der Sequenz aus Bildern an die Auswerteeinheit kann kabelgebunden oder kabellos (z.B. via WLAN) erfolgen.

Weiterhin ist der zumindest eine Sensor dazu eingerichtet, in jedem Bild der Sequenz einen Oberflächenbereich des zumindest einen Metallstranges mit dem darauf projizierten Lichtmuster zu erfassen. Der von dem Sensor erfassbare Oberflächenbereich erstreckt sich dabei entlang der Längsrichtung X_{S} des Metallstranges und gleichzeitig in einer Ebene normal zu dessen Längsrichtung X_{S}. Demnach umfasst beispielsweise der von dem Sensor erfassbare Oberflächenbereich eines Metallstranges mit einem rechteckigen Gießquerschnitt sowohl einen Teil der horizontal orientierten, obenliegenden Außenfläche als auch einen Teil von einer der beiden vertikal orientierten, seitlichen Außenflächen des betreffenden Metallstranges, was durch eine Anordnung des Sensors entlang der Querrichtung Y in einem Normalabstand n (beispielsweise 400mm bis 800mm) zu einer vertikalen Mittenebene durch den betreffenden Metallstrang erreicht werden kann.

Weiterhin kann im Falle mehrerer Metallstränge der zumindest eine Sensor dazu eingerichtet sein, entsprechende Oberflächenbereiche von zumindest zwei - beispielsweise in Querrichtung Y benachbarter - Metallstränge zu erfassen, was durch eine geeignete Wahl der Höhe h bei der Anordnung des Sensors oberhalb des Auslaufbereichs erzielt werden kann. Beispielsweise kann der zumindest eine Sensor in Querrichtung Y gesehen zwischen einem ersten und einem zweiten Metallstrang angeordnet werden, wodurch ein jeweiliger Oberflächenbereich des ersten und zweiten sich durch den Auslaufbereich bewegenden Metallstranges sowie das jeweils auf den ersten und den zweiten Metallstrang projizierte Lichtmuster von dem Sensor erfasst werden kann. Auch die zumindest eine Projektionsvorrichtung kann zur Projektion eines Lichtmusters beispielsweise in derselben Höhe h über dem Auslaufbereich der Stranggießanlage angeordnet werden.

Durch die beschriebene Anordnung von Projektionsvorrichtungen und Sensoren wird kostengünstig eine gleichzeitige Vermessung von mehreren Metallsträngen ermöglicht. Beispielsweise wird derart die Vermessung einer geraden Anzahl an Metallsträngen mittels lediglich der halben Anzahl an Projektionsvorrichtungen und Sensoren ermöglicht, wenn diese jeweils in Querrichtung Y zwischen zwei benachbarten Metallsträngen angeordnet werden. Voraussetzung sind lediglich Sensoren mit einer für eine gewünschte Genauigkeit der Vermessung Metallstränge erforderlichen Auflösung des abgebildeten Oberflächenbereiches der von einem Sensor erfassbarenen Metallstränge.

Die Auswerteeinheit der erfindungsgemäßen Vorrichtung ist dazu eingerichtet, den von dem Sensor erfassbaren Oberflächenbereich des Metallstranges und das darauf projizierte Lichtmuster in den einzelnen Bildern der jeweiligen Sequenz eines jeden Sensors zu detektieren.

Unter 'detektierbar' ist in diesem Zusammenhang zu verstehen, dass die Bildinformation des Lichtmusters in den einzelnen Bildern der Sequenz von der Bildinformation der Oberfläche des Metallstranges unterscheidbar ist. Hierfür werden die Strahlungsleistung der betreffenden Projektionsvorrichtung und die Belichtungszeit des betreffenden bildgebenden Sensors auf die thermische Emissionsleistung der Oberfläche des betreffenden Metallstranges abgestimmt. Konkret bedeutet dies, dass die Strahlungsleistung einer Projektionsvorrichtung in einem vorgegebenen Wellenlängenbereich derart gewählt wird, dass die flächenbezogene Strahlungsleistung in diesem Wellenlängenbereich des an einer Strangoberfläche rückgestreuten Lichtmusters einerseits die flächenbezogene thermische Strahlungsleistung der Strangoberfläche selbst - beispielsweise zumindest um 50% - übersteigt, andererseits den Sensor aber nicht übersättigt (keine 'Überbelichtung'). Gleichzeitig muss die Belichtungszeit des Sensors bei der Erzeugung eines Einzelbildes entsprechend der jeweiligen thermischen Strahlungsleistung der heißen Strangoberfläche gewählt werden, da diese gemäß Planck'schem Strahlungsgesetz stark von der Temperatur der Strangoberfläche abhängig ist. Durch eine entsprechende Anpassung der Strahlungsleistung einer Projektionsvorrichtung sowie der Belichtungszeit eines Sensors an die Oberflächentemperatur eines Metallstranges kann erreicht werden, dass neben dem projizierten Lichtmuster auch Oberflächenstrukturen des heißen Metallstranges (beispielsweise aufgrund einer ungleichmäßigen Verzunderung der Oberfläche) in einem von dem Sensor generierten Bild detektierbar sind. Im Falle mehrerer bildgebender Sensoren ist die Auswerteeinheit dazu eingerichtet, die der Anzahl der Sensoren entsprechenden Bildsequenzen auszuwerten und einen spezifischen Metallstrang, der von mehreren Sensoren gleichzeitig erfasst wird, in den unterschiedlichen Sequenzen zu identifizieren.

Dementsprechend ist die Auswerteeinheit der erfindungsgemäßen Vorrichtung dazu eingerichtet, aus der räumlichen Anordnung der Projektionsvorrichtung und des Sensors relativ zu dem Auslaufbereich einerseits sowie aus dem von dem zumindest einen Sensor erfassbaren und von der Auswerteeinheit detektierbaren Oberflächenbereich des Metallstranges und dem von der Projektionsvorrichtung darauf projizierten Lichtmuster andererseits die geometrischen Abmessungen des Metallstranges an einer Vielzahl von Positionen entlang der Längsrichtung X_{S} des Metallstranges sowie eine Geschwindigkeit V_{S} des Metallstranges in Produktionsrichtung X anhand eines korrelativen optischen Messverfahrens zu ermitteln.

Weil das auf den Metallstrang projizierte Lichtmuster räumlich in Bezug auf die Stranggießanlage feststehend ist, sich der Metallstrang jedoch entlang seiner Längsrichtung X_{S} in Produktionsrichtung X mit einer Geschwindigkeit V_{S} relativ zum Auslaufbereich der Stranggießanlage bewegt, zeigen die einzelnen, zeitlich versetzten Bilder der von dem Sensor erzeugten Sequenz das projizierte Lichtmuster sowie den von dem Sensor erfassbaren Oberflächenbereich jeweils an unterschiedlichen Positionen entlang der Längsrichtung X_{S} des Metallstranges entsprechend der Relativbewegung des Metallstranges zum Auslaufbereich bzw. zur Stranggießanlage. Auf diese Weise entstehen - beispielsweise bei einem einfachen, linienförmigen Lichtmuster - eine Vielzahl von entlang der Längsrichtung X_{S} versetzte Schnittlinien auf der Oberfläche des Metallstranges.

Für das obengenannte korrelative optische Geschwindigkeitsmessverfahren ist die Auswerteeinheit eingerichtet, individuelle Texturen auf Metallsträngen in zwei oder mehreren Bildern der Bildsequenz zu identifizieren, deren relative Bildposition in den zwei oder mehreren aufeinanderfolgenden Bildern zu ermitteln und daraus sowie aus der Bildfrequenz und dem Abbildungsmaßstab des betreffenden Sensors eine Geschwindigkeit V_{S} des Metallstranges relativ zum dem Sensor abzuleiten. Bevorzugt kann ein Sensor derart angeordnet werden, dass die Sensorebene parallel zur Produktionsrichtung X verläuft. Dadurch werden perspektivische Verzerrungen des von dem Sensor erfassten Oberflächenbereiches eines Metallstranges minimiert und die Ermittlung der Geschwindigkeit V_{S} des betreffenden Metallstranges mit hoher Genauigkeit ermöglicht.

Weiterhin wird durch eine gleichzeitige Ermittlung der Geschwindigkeit V_{S}, mit der sich der Metallstrang durch den Auslaufbereich bewegt, eine räumlich Verortung der in den einzelnen Bildern erfassten Lichtmuster auf der Oberfläche des betreffenden Metallstranges ermöglicht, da eine Kenntnis der Geschwindigkeit V_{S} des Metallstranges eine räumliche Zuordnung der Lichtmuster auf die Oberfläche des Metallstranges selbst ermöglicht. Anders ausgedrückt: die Kenntnis der Geschwindigkeit V_{S} erlaubt die Zuordnung der in einem feststehenden Koordinatensystem der Stranggießanlage erfassten Lichtmuster zu einem 'lokalen' Koordinatensystem des Metallstranges. Folglich kann ohne Zuhilfenahme weiterer externer Information (wie z.B. eines von einer weiteren Vorrichtung ermittelten Geschwindigkeitssignals des Metallstranges) ein räumliches Profil der Oberfläche des Metallstranges bzw. dessen geometrischen Abmessungen in einer Ebene normal zur Längsrichtung X_{S} ermittelt werden.

Beispielsweise ist es auch möglich, die momentane Geschwindigkeit V_{S} mit einer zeitlichen Auflösung entsprechend der zeitlichen Abstände zwischen einzelnen Bildern (Bildfrequenz) zu ermitteln, wenn beispielsweise dafür zwei aufeinanderfolgende Bilder herangezogen werden. Dies ist besonders vorteilhaft, wenn sich die Geschwindigkeit V_{S} kurzfristig (d.h. beispielsweise auf einer Zeitskala von weniger als einer Sekunde) ändert, wie z.B. bei der Beschleunigung nach erfolgter Abtrennung von einem Endlosstrang. Auch eine Interpolation der Bildinformationen von mehr als zwei Bildern einer Sequenz zur Steigerung der Genauigkeit, mit der die Geschwindigkeit V_{S} bestimmt wird, ist möglich.

Die beschriebene Anordnung der erfindungsgemäßen Vorrichtung ist auch deswegen vorteilhaft, da in der Regel oberhalb des Auslaufbereiches einer Stranggießanlage keine weiteren Gewerke angeordnet sind und somit eine Nachrüstung einer bestehenden Stranggießanlage in besonders einfacher Weise ermöglicht wird. Weiterhin können durch die beschriebene Anordnung der erfindungsgemäßen Vorrichtung an einer Stranggießanlage auch Probleme im Gießprozess unmittelbar an der Anlage selbst und somit zeitnah erfasst werden, wodurch eine Abwertung bzw. Verschrottung der produzierten Gießstränge minimiert werden können. Bevorzugte Werte für die Höhe h liegen in einem Bereich von 1.5m bis 2.0m. Auch kleinere oder größere Werte sind möglich.

Aus der von einem Sensor generierten Sequenz aus zweidimensionalen Bildern kann beispielsweise mittels einer Bildfolgeanalyse die Geschwindigkeitskomponente V_{S} eines Metallstranges in Produktionsrichtung X bestimmt werden. Voraussetzung hierfür ist einerseits die Kenntnis der räumlichen Anordnung des betreffenden Sensors in Bezug auf den in den Bildern detektierbaren Metallstrang, der Abbildungsmaßstab des Sensors sowie der Bildfrequenz der Sequenz, andererseits eine bereits genannte Detektierbarkeit von - in Bezug auf den Metallstrang - ortsfesten Texturen auf dem jeweiligen Oberflächenbereich des Metallstranges. Der Abbildungsmaßstab des bildgebenden Sensors hängt von der räumlichen Anordnung des Sensors in Bezug auf ein abzubildendes Objekt (Metallstrang), von einer bilderzeugenden Optik für den Sensor (Objektiv bzw. dessen Brennweite) sowie vom Auflösungsvermögen des Sensors selbst ab (z.B. Pixelgröße im Falle eines elektronischen Sensors).

Derartige Textur entstehen beispielsweise durch die Ausbildung lokal unterschiedlich dicker Zunderschichten auf der Oberfläche eines heißen Metallstranges (Zunderflecken), wobei die einzelnen Zunderschichten die thermische Strahlungsemission des entsprechenden Bereichs auf der Metalloberfläche beeinflussen. Einerseits beeinflusst die Dicke der Zunderschicht das Abkühlverhalten und somit die lokale Temperatur an der betreffenden Stelle, andererseits hängt auch die spezifische Emissivität einer heißen Metalloberfläche von der Dicke der darauf befindlichen Zunderschicht ab. Entsprechend dem Planck'schen

Strahlungsgesetz und dem Stefan-Boltzmann-Gesetz beeinflusst die Dicke einer Zunderschicht somit die Wellenlängenverteilung der thermischen Emission einer heißen Metalloberfläche sowie deren abgegebene Strahlungsleistung. In der Folge bilden unterschiedlich dicke Zunderschichten lokale Texturen auf Metallsträngen mit einer typischen Oberflächentemperatur von 300°C - 1000°C aus, die von Sensoren mit einer spektralen Empfindlichkeit im visuellen und nahinfraroten Bereich des elektromagnetischen Spektrums (400nm - 1100nm) detektiert werden können.

Der Vorteil einer Bestimmung der Geschwindigkeit auf Basis eines korrelativen optischen Verfahrens besteht in einer geringeren Fehleranfälligkeit hinsichtlich optischer Sichtbedingungen des bildgebenden Sensors (Staub, Dampf) an einer Stranggießanlage: für die Identifizierung einer individuellen, durch Zunder hervorgerufenen Textur auf einer Strangoberfläche wird ein - in der Bildsequenz abgebildeter - Oberflächenbereich des betreffenden Metallstranges ausgewertet, der sich zumindest über die gesamte Erstreckung in Querrichtung Y des Gießstranges sowie in dessen Längsrichtung X_{S} über ein Mehrfaches (beispielsweise das zwei- bis 10-fache) davon erstreckt. Dadurch ist es der Auswerteeinheit möglich, Texturen zu identifizieren, deren Ausdehnung in einer vergleichbaren Größenordnung liegen und sich in zumindest einer Richtung über Distanz von mehreren Zentimetern, beispielsweise über zumindest 2cm, erstrecken.

Es ist folglich der Auswerteeinheit der erfindungsgemäßen Vorrichtung möglich, individuelle Texturen auf den erfassten Oberflächenbereichen zu identifizieren und die räumliche Position der Texturen in den Bildern der Sequenz jeweils genau zu verorten, da derartig Texturen aufgrund ihrer Ausdehnung und ihres individuellen Musters auch bei eingeschränkten Sichtbedingungen (Staub, Dampf) zwischen dem bildgebendem Sensor und dem Metallstrang mit hoher Wahrscheinlichkeit rekonstruiert werden können, selbst wenn Teile einer Textur in einzelnen Bildern der Sequenz fehlen. Anders ausgedrückt: die Ermittlung der räumlichen Position einer großflächigen Textur in einer Sequenz aus Bildern ist auch bei Vorliegen von Bildfehlern bzw. dem Fehlen Texturteilen mit sehr hoher Zuverlässigkeit und Genauigkeit möglich, sodass daraus auch die Ermittlung der Geschwindigkeit der die Textur tragenden Oberfläche mit entsprechender Zuverlässigkeit und Genauigkeit möglich ist. Im Gegensatz dazu ist eine auf einer punktuellen Messung (Spotmessung) basierende Ermittlung einer Geschwindigkeitskomponente, wie z.B. bei einem Laser-Doppler-Velocimeter, viel stärker von Beeinträchtigungen der optischen Sichtlinie abhängig und dementsprechend weniger zuverlässig.

Bei der erfindungsgemäßen Vorrichtung kann die zumindest eine Projektionsvorrichtung in einem horizontalen Abstand d zu dem zumindest einen Sensor angeordnet werden. Dadurch wird vorteilhaft erreicht, dass ein auf den Metallstrang projiziertes Lichtmuster eine unterschiedliche Verzerrung auf dem Oberflächenbereich des Metallstranges entlang der unterschiedlichen Raumrichtungen X, Y und Z erfährt. Dadurch können vorteilhaft - insbesondere bei Metallsträngen mit einem rechteckigen Gießquerschnitt - die geometrischen Abmessungen eines Metallstranges entlang der unterschiedlichen Raumrichtungen X, Y und Z besonders deutlich unterschieden werden. Beispielsweise kann eine Projektionsvorrichtung in einem horizontalen Abstand d von 0.5m bis 1.0m entlang der Produktionsrichtung X zu dem zumindest einen Sensor angeordnet werden. Beispielsweise kann der Abstand d gleich der Höhe h sein (d=h), in welcher der Sensor oberhalb des Auslaufbereiches angeordnet ist. Weiterhin kann auch die Projektionsvorrichtung in einem Abstand oberhalb des Auslaufbereichs angeordnet werden, z.B. in derselben Höhe h wie der Sensor.

Im Falle eines linienartigen Lichtmusters wird dieses als ein Profilschnitt auf die Oberfläche des Metallstranges projiziert. Durch die obengenannte Anordnung der Projektionsvorrichtung wird ein Profilschnitt einer in Querrichtung Y projizierten Linie bei der Projektion auf eine vertikale Seitenfläche eines Gießstranges mit rechteckigem Gießquerschnitt entlang der Produktionsrichtung X verzerrt bzw. verkippt, während auf der obenliegenden, horizontalen Seitenfläche des Metallstranges keine Verzerrung stattfindet. In der Folge tritt durch die Verzerrung des Profilschnittes die die beiden ebenen Seitenflächen begrenzende Kante des Metallstranges besonders deutlich hervor.

Gemäß einer weiteren Ausgestaltung der erfindungsgemäßen Vorrichtung weist die Projektionsvorrichtung zur Projektion des Lichtmusters zumindest eine, bevorzugt zumindest zwei Lichtquellen auf, die zur Emission von Licht in einem Wellenlängenbereich von 370nm bis 550nm, bevorzugt 430nm bis 520nm, eingerichtet sind und wobei der Sensor als elektronischer Sensor zur Erzeugung von zweidimensionalen Farbbildern ausgestaltet ist. Durch die Verwendung von Licht aus dem grün-blauen bis ultravioletten Teil des elektromagnetischen Spektrums für die Projektion des Lichtmusters auf eine heiße Strangoberfläche wird eine bessere Detektierbarkeit projizierten Lichtmusters gewährleistet, weil das Maximum der von einer bis zu 1000°C heißen Strangoberfläche emittierten thermischen Strahlungsleistung in Bezug auf die Wellenlänge gemäß Planck'schem Strahlungsgesetz weitab des blauen bis ultravioletten Wellenlängenbereiches liegt. Vereinfacht ausgedrückt emittiert eine heiße Strangoberfläche den überwiegenden Anteil ihrer thermischen Strahlung im roten bis infraroten Bereich, während der Anteil an emittiertem grünem, blauem bzw. ultraviolettem Licht im Vergleich dazu deutlich geringer ist.

Die Projektionsvorrichtung kann insbesondere für den Fall mehrerer Metallstränge auch mehrere Lichtquellen aufweisen. Wenn die Projektionsvorrichtung beispielsweise in Querrichtung Y zwischen zwei Metallsträngen angeordnet ist, kann die Projektionsvorrichtung zwei Lichtquellen aufweisen, wobei jede Lichtquelle eingerichtet ist, ein Lichtmuster auf einen der beiden Metallstränge zu projizieren, zwischen denen die Projektionsvorrichtung angeordnet ist.

Weiterhin sind elektronische Sensoren zur Erzeugung von zweidimensionalen Farbbildern beispielsweise als kostengünstige CCD-Sensoren oder CMOS-Sensoren verfügbar, wobei jedem Bildelement (Sensorpixel) eines Sensors ein Farbfilterelement aus einer Farbfiltermatrix vorgeschaltet ist, sodass ein einzelnes Sensorpixel nur Licht aus dem entsprechenden Farbbereich des vorgeschalteten Farbfilterelements empfangen kann. Die Gesamtheit der Bildelemente eines Sensors mit einem gleichartigen Farbfilterelement wird als Farbkanal des Sensors bezeichnet. Entsprechend der Art der eingesetzten Farbfilterelemente weist ein Sensor bzw. das von ihm erzeugte Bild verschiedene Farbkanäle auf, beispielsweise jeweils einen Rot-, Grün- und einen Blaukanal. Ein Sensor ohne Farbfiltermatrix hingegen liefert einen den gesamten Empfindlichkeitsbereich des Sensors umfassendes Schwarz-Weiß-Bild mit nur einem Farbkanal, dem sogenannten Luminanzkanal. Die Farbfiltermatrix eines Sensors kann z.B. als Bayer-Matrix (periodische Anordnung von zwei grünen und je einem roten und blauen Farbfilterelement) ausgestaltet sein.

Bevorzugt ist in diesem Zusammenhang die Lichtquelle als Laserlichtquelle ausgestaltet. Laserlichtquellen können in robuster und kompakter Bauform beispielsweise als sogenannte Laserprojektoren, die aus dem Stand der Technik bekannt sind, ausgestaltet werden. Mittels Laserlichtquellen können einerseits linienartige Lichtmuster (beispielsweise mittels einer passiven Projektionsoptik in Form von Liniensegmenten oder Kreislinien) mit geringem Flächeninhalt projiziert werden, andererseits ist die von Laserlichtquellen abgegebene Strahlung in der Regel monochromatisch. Daher kann vorteilhaft die für eine Detektierbarkeit eines Lichtmusters auf einem heißen Metallstrang benötigte Strahlungsleistung der Lichtquelle minimal gehalten werden.

In einer weiteren bevorzugten Weiterentwicklung der erfindungsgemäßen Vorrichtung kann die Projektionsvorrichtung derart angeordnet sein, dass das Lichtmuster in Produktionsrichtung X hinter einer Trennvorrichtung der Stranggießanlage auf den zumindest einen Metallstrang projizierbar ist.

In den meisten Fällen ist der Auslaufbereich einer Stranggussanlage derart ausgestaltet, dass die Geschwindigkeit eines Metallstranges nach erfolgter Abtrennung von einem Endlosstrang mittels Treiberrollen des Auslaufbereiches von einem niedrigeren Wert (Gießgeschwindigkeit) auf einen höheren Wert (Vereinzelungsgeschwindigkeit) erhöht wird, wodurch ein räumlicher Abstand in Produktionsrichtung X zu dem nachfolgenden Endlosstrang entsteht (Vereinzelung). Indem gemäß der erfindungsgemäßen Weiterentwicklung die Projektion

des Lichtmusters auf den Metallstrang - in Produktionsrichtung X gesehen - hinter einer entsprechenden Trennvorrichtung erfolgt, kann die von dem Trennschnitt verursachte Änderung des projizierten Lichtmusters von dem Sensor der erfindungsgemäßen Vorrichtung erfasst und folglich der Trennschnitt von der Auswerteeinheit räumlich und zeitlich in der von dem Sensor generierten Bildsequenz verortet werden.

Beispielsweise kann die Projektionsvorrichtung in Produktionsrichtung X gesehen in einem horizontalen Abstand d hinter einem bildgebenden Sensor und in einem Abstand hinter einer Trennvorrichtung angeordnet werden, der das 1,5- bis 2-fache des Abstandes d beträgt. Jedoch sind in diesem Zusammenhang auch wesentlich größere Werte, beispielsweise bis zu 15m, für den Anstand d denkbar. Alternativ kann die Projektionsvorrichtung auch - wiederum in Produktionsrichtung X gesehen - näher an einer Trennvorrichtung angeordnet sein als der bildgebende Sensor. In einer weiteren Alternative kann die Projektionsvorrichtung in Produktionsrichtung X vor einer Trennvorrichtung und der Sensor hinter der Trennvorrichtung angeordnet sein. Ausschlaggebend bei diesen Varianten ist lediglich, dass das Lichtmuster an einer Stelle auf den Metallstrang projiziert wird, an der der dieser bereits durch die Trennvorrichtung von dem Endlosstrang abgetrennt und vereinzelt ist, sodass der Trennschnitt durch einen Wechsel des auf den Metallstrang projizierten Lichtmusters in der von dem Sensor generierten Sequenz aus zweidimensionalen Bildern detektierbar ist. Weiterhin können sich die Längen, mit denen mehrere Metallstränge gleichzeitig an einer mehrsträngigen Stranggießanlage produziert werden, aufgrund unterschiedlicher Produktionsvorgaben voneinander unterscheiden, sodass die entsprechenden Trennvorgänge der einzelnen Metallstränge zueinander asynchron ablaufen können.

In einer alternativen Ausgestaltung der erfindungsgemäßen Vorrichtung kann die Projektionsvorrichtung derart angeordnet sein, dass das Lichtmuster in Produktionsrichtung X vor einer Trennvorrichtung der Stranggießanlage auf den zumindest einen Metallstrang projizierbar ist. Dementsprechend ist in dieser Ausgestaltung auch der zumindest eine Sensor dazu eingerichtet, den sich entlang einer Längsrichtung X_{S} und gleichzeitig in einer Ebene normal zur Längsrichtung X_{S} erstreckenden Oberflächenbereich des zumindest einen Metallstranges mit dem darauf projizierten Lichtmuster vor einer Trennvorrichtung der Stranggießanlage zu erfassen, weswegen ein Trennschnitt selbst von dem Sensor nicht erfasst werden kann.

Es können somit von der Auswerteeinheit zwar die geometrischen Abmessungen des noch nicht geschnittenen Endlosstranges an einer - im Prinzip beliebigen - Anzahl von Positionen entlang der Längsrichtung X_{S} des Endlosstranges sowie dessen Gießgeschwindigkeit ermittelt werden, allerdings muss für die Ermittlung der Länge eines nachfolgend von dem Endlosstrang abgetrennten Metallstranges ein entsprechendes externes Signal, das einen Trennschnitt signalisiert, an die Auswerteeinheit übermittelt werden.

Die Vorteile und technischen Wirkungen des erfindungsgemäßen Verfahrens korrespondieren mit jenen der erfindungsgemäßen Vorrichtung. Bei dem erfindungsgemäßen Verfahren zum berührungslosen Vermessen zumindest eines, bevorzugt zumindest zweier sich entlang einer Produktionsrichtung X einer Stranggießanlage durch einen Auslaufbereich der Stranggießanlage bewegenden Metallstränge, insbesondere im Knüppel- oder Vorblockformat, wird mittels zumindest einer, bevorzugt zumindest zweier Projektionsvorrichtungen zumindest ein, bevorzugt zumindest zwei Lichtmuster auf den Metallstrang projiziert. Weiterhin wird dabei mittels zumindest eines, bevorzugt zumindest zweier Sensoren eine zeitliche Sequenz zweidimensionaler Bilder generiert und an eine Auswerteeinheit übermittelt. Die Projektionsvorrichtung ist in einem horizontalen Abstand d zu dem Sensor angeordnet. Dabei wird von dem Sensor ein Oberflächenbereich des Metallstranges mit dem darauf projizierten Lichtmuster erfasst, wobei sich der erfasste Oberflächenbereich entlang der Längsrichtung X_{S} des Metallstranges und gleichzeitig in einer Ebene normal zur Längsrichtung X_{S} erstreckt. Mittels der Auswerteeinheit wird der von dem Sensor erfasste Oberflächenbereich und das darauf projizierte Lichtmuster in den einzelnen Bildern der Sequenz detektiert. Aus der räumlichen Anordnung der Projektionsvorrichtung und des Sensors relativ zu dem Auslaufbereich sowie aus dem detektierten Oberflächenbereich und dem darauf projizierten Lichtmuster werden in der Folge mittels der Auswerteeinheit die geometrischen Abmessungen des Metallstranges an einer Vielzahl von Positionen entlang der Längsrichtung X_{S} des Metallstranges ermittelt und es wird mittels der Auswerteeinheit eine Geschwindigkeit V_{S} des Metallstranges in Produktionsrichtung X mittels eines korrelativen optischen Messverfahrens ermittelt. Dabei werden mittels der Auswerteeinheit individuelle Texturen auf Metallsträngen in zwei oder mehreren Bildern der Bildsequenz identifiziert, deren relative Bildposition in den zwei oder mehreren aufeinanderfolgenden Bildern ermittelt und daraus sowie aus der Bildfrequenz und dem Abbildungsmaßstab des betreffenden Sensors eine Geschwindigkeit V_{S} des Metallstranges relativ zu dem Sensor abgeleitet.

Bei einer Ausgestaltung des erfindungsgemäßen Verfahrens wird zur Verbesserung der Detektion eines auf einen heißen Metallstrang projizierten Lichtmusters mittels der Projektionsvorrichtung das entsprechende Lichtmuster mittels zumindest einer, bevorzugt zumindest zweier Lichtquellen auf den Metallstrang projiziert. Dabei wird von der Lichtquelle Licht in einem Wellenlängenbereich von 370nm bis 550nm, bevorzugt 430nm bis 520nm, emittiert. Weiterhin wird die Sequenz zweidimensionaler Bilder mittels eines elektronischen Farbsensors, der zur Erzeugung zweidimensionaler elektronischer Farbbilder eingerichtet ist, generiert und damit ein Oberflächenbereich des betreffenden Metallstranges und das darauf projizierte Lichtmuster erfasst. Gemäß den vorangegangenen Ausführungen zu Farbbildern wird in dieser Ausgestaltung entsprechend der Wellenlänge der eingesetzten grünen, blauen bzw. ultravioletten Lichtquelle nur der Grün - und/oder der Blaukanal der von dem Sensor generierten Bilder der Sequenz zur Detektion des auf den erfassten Oberflächenbereich projizierten Lichtmusters herangezogen, da in diese Farbkanälen die Detektierbarkeit des Lichtmusters gegenüber dem Rotkanal oder auch gegenüber einem Luminanzkanal eines Farbbildes verbessert ist. Zusätzlich kann ein Bandpassfilter, der den roten und infraroten Bereich des Spektrums aussperrt, zur Verbesserung der Detektion des Lichtmusters verwendet werden. Auf teure Schmalbandfilter mit einem Durchlassbereich von nur wenigen Nanometern (z.B. 1-20nm) - wie z.B. von der WO 2011/076187 A1 vorgeschlagen - kann verzichtet werden. Optional kann aufgrund Charakteristik der thermischen Emission eines heißen Metallstranges für die Detektion von darauf befindlichen Oberflächenmustern ausschließlich bzw. bevorzugt (z.B. mit einer entsprechenden Gewichtung gegenüber den anderen Farbkanälen) der Rotkanal herangezogen werden.

Bei einer weiteren Ausgestaltung des erfindungsgemäßen Verfahrens werden die Bilder der Sequenz mit einer Frequenz (Bildrate) von mindestens 2Hz, bevorzugt mindestens 5Hz, besonders bevorzugt mindestens 15Hz generiert. Die zeitlichen Abstände - konkret: der zeitliche Abstand zwischen dem Beginn der jeweiligen Bildaufnahme (Belichtung) - zwischen den einzelnen Bildern der Sequenz betragen demnach höchstens 500ms, bevorzugt höchstens 200ms. Dadurch werden jene Positionen entlang der Längsrichtung X_{S} des Metallstranges, an denen jeweils ein Profil entlang der Oberfläche eines Metallstranges ermittelt werden, nur wenige Millimeter voneinander beabstandet, sodass eine besonders genaue Ermittlung des Oberflächenprofils des Metallstranges ermöglicht wird.

Metallstränge werden beispielsweise nach der Vereinzelung auf eine Geschwindigkeit von etwa 6 Meter pro Minute beschleunigt. Demzufolge wird bei einer Bildrate von 5Hz die Oberfläche des betreffenden Metallstranges im Abstand von 20mm 'abgetastet', wodurch Zunderflecken mit einer Ausdehnung von bereits wenigen Zentimetern und mit einer Dicke von mindestens etwa 1mm erfasst werden können. Da Zunderflecken nicht Teil des Volumens des eigentlichen Metallstranges sind und in einem späteren Arbeitsschritt ohnehin entfernt werden müssen, können sie für die Ermittlung der geometrischen Abmessungen und des Gewichtes des fertig produzierten Metallstranges bereits mitberücksichtigt werden.

Bei einer weiteren Ausgestaltung des erfindungsgemäßen Verfahrens wird mittels der Projektionsvorrichtung genau ein Lichtmuster auf jeden Metallstrang projiziert und es wird zur Ermittlung der geometrischen Abmessungen des Metallstranges eine Punktsymmetrie des Metallstranges in einer Ebene normal zu seiner Längsrichtung X_{S} angenommen. Dabei erstreckt sich das eine, auf den Metallstrang projizierte Lichtmuster aus geometrischen Gründen auf bis zu 50% entlang einer Umfangsrichtung des Metallstranges. Beispielsweise wird im Fall eines Metallstranges mit rechteckigem Gießquerschnitt das Lichtmuster auf die horizontale, obenliegende Außenfläche und auf eine der beiden vertikal orientierten, seitlichen Außenflächen des Metallstranges projiziert. Aufgrund des Umstandes, dass sich das projizierte Lichtmuster über zwei zueinander nicht-parallele Außenflächen des Metallstranges erstreckt, kann auch ein Winkel zwischen den Normalvektoren dieser beiden ebenen Außenflächen bestimmt werden. Über diesen Winkel sowie über die ebenfalls ermittelbaren Abmessungen des Gießquerschnittes entlang der Umfangrichtung des jeweiligen Metallstranges kann die Länge der beiden Diagonalen des betreffenden Gießquerschnittes - und somit ein Maß für die Rhomboidität des Metallstranges - ermittelt werden. Weiterhin ist in dieser Ausgestaltung auch eine Detektion von Bulging bzw. Snaking (Flächenänderung des Gießquerschnittes des Metallstranges bzw. Verkrümmungen des Metallstranges jeweils entlang seiner Längsrichtung X_{S}) möglich.

Bei einer weiteren Ausgestaltung des erfindungsgemäßen Verfahrens werden mittels zumindest zweier Projektionsvorrichtungen zwei Lichtmuster aus unterschiedlichen räumlichen Richtungen auf zumindest einen Metallstrang projiziert und es wird mittels zumindest zweier Sensoren jeweils ein Oberflächenbereich von dem zumindest einem Metallstrang aus unterschiedenen räumlichen Perspektiven erfasst. Dabei überlappen sich sowohl die Überdeckungen der Lichtmuster als auch die Oberflächenbereiche der Sensoren entlang einer Umfangsrichtung des betreffenden zumindest einen Metallstranges. Weiterhin können bei dieser Ausgestaltung jene Projektionsvorrichtungen, mittels derer jeweils ein Lichtmuster auf ein- und denselben Metallstrang projiziert wird und jene Sensoren, mittels derer jeweils ein Oberflächenbereich von ein- und demselben Metallstrang erfasst wird, auf unterschiedlichen Seiten von einer vertikalen Mittenebene durch den betreffenden Metallstrang beabstandet werden. Dadurch wird der von den Sensoren mit den darauf projizierten Lichtmustern erfasste Oberflächenbereich entlang einer Umfangsrichtung des betreffenden Metallstranges auf über 50% des Umfanges des Metallstranges vergrößert.

Durch die beschriebene Vorgehensweise können die geometrischen Abmessungen eines betreffenden Metallstranges noch genauer ermittelt werden, da eine Punktsymmetrie des Metallstranges in einer Ebene normal zu seiner Längsrichtung X_{S} nicht vorausgesetzt werden muss. Dadurch werden geometrische Abmessungen des Metallstranges noch genauer erfassbar, so können beispielsweise eine Nichtparallelität von unterer und oberer Fläche sowie unterschiedliche Ausbauchungen von linker und rechter Fläche festgestellt werden. Vielmehr können beispielsweise bei Metallsträngen mit rechteckigem Gießquerschnitt drei Seitenflächen der Oberfläche erfasst und die Längen von beiden Diagonalen des Gießquerschnittes ermittelt werden. Eine Längendifferenz zwischen den beiden Diagonalen kann als Maß für die Rhomboidität des betreffenden Metallstranges herangezogen werden. Auch bei runden Gießformaten kann durch eine Erfassung eines sich mehr als 50% entlang einer Umfangsrichtung erstreckenden Oberflächenbereiches ein Durchmesser an mehreren Stellen entlang der Umfangsrichtung ermittelt und so beispielsweise eine Abweichung von einer gewünschten Form (z.B. Elliptizität) des Gießquerschnittes genauer ermittelt werden.

Bei einer weiteren Ausgestaltung des erfindungsgemäßen Verfahrens werden aus der Geschwindigkeit V_{S} des Metallstranges in Produktionsrichtung X anhand eines von der Auswerteeinheit detektierten Trennschnittes des Metallstranges eine Länge und ein Gewicht des Metallstranges ermittelt.

Durch die Detektion eines bereits voranstehend beschriebenen Trennschnittes eines vereinzelten Metallstranges durch die Auswerteeinrichtung kann aus der ermittelten Geschwindigkeit V_{S} des vereinzelten Metallstranges dessen Länge beispielsweise mit einer durchschnittlichen Abweichung von ±0,015% von der tatsächlichen Länge bestimmt werden. Über die ebenfalls ermittelten geometrischen Abmessungen des Metallstranges an einer Vielzahl von Positionen entlang dessen Längsrichtung X_{S} und in einer Ebene normal zu dessen Längsrichtung X_{S} kann in der Folge anhand der Dichte des Metallstranges auch sein Gewicht - mit einer durchschnittlichen Abweichung von +0,25% bzw. mit einer maximalen Abweichung von +0,5% vom tatsächlichen Gewicht - bestimmt werden. Somit kann eine berührungslose Ermittlung der geometrischen Qualitätsparameter sowie des Gewichtes eines vereinzelten Metallstranges mit entsprechend verbesserter Genauigkeit aus Messwerten erfolgen, die direkt an der Stranggießanlage für einen bereits geschnittenen Metallstrang ermittelt werden und nicht indirekt aus Messwerten abgeleitet werden müssen, die sich auf einen noch nicht geschnittenen Endlosstrang beziehen.

Bei einer alternativen Ausgestaltung des erfindungsgemäßen Verfahrens werden aus der Geschwindigkeit V_{S} des Metallstranges in Produktionsrichtung X anhand eines externen, einen erfolgten Trennschnitt des Metallstranges anzeigenden und an die Auswerteeinheit übermittelten Signals eine Länge und ein Gewicht des Metallstranges ermittelt.

Diese Ausgestaltung kann in Zusammenhang mit der voranstehend beschriebenen, alternativen Ausgestaltung der erfindungsgemäßen Vorrichtung eingesetzt werden, bei der das Lichtmuster in Produktionsrichtung X vor einer Trennvorrichtung der Stranggießanlage auf den Metallstrang projizierbar ist.

Diese alternative Ausgestaltung kann vorteilhaft eingesetzt werden, wenn beispielsweise am auslaufseitigen Ende des Gießbogens die Fläche des Gießquerschnitts eines Endlosstranges, beispielsweise mittels speziell dafür vorgesehener Rollenpaare, reduziert wird (sogenannte "Soft-Reduction"). Würde eine Schnittlänge eines von dem Endlosstrang abzutrennenden Metallstrangs fix vorgegeben, so würde sich dessen Volumen und Gewicht entsprechend der im Gießbogen durchgeführten Querschnittsreduktion verringern. Da jedoch bei einer eine derartige Querschnittsreduktion die Ansteuerung der entsprechenden Rollen in der Regel kraftgesteuert erfolgt, lässt sich der Wert der tatsächlich durchgeführten Reduktion nicht genau vorhersagen. Um ein vorgegebenes Gewicht eines abzutrennenden Metallstranges daher genauer erzielen zu können, wird gemäß dieser alternativen Ausgestaltung nach Beendigung einem erfolgten Trennschnitt ein externes Signal (z.B. von einer Anlagenautomation der Stranggießanlage, die die Trennvorrichtung datentechnisch überwacht) an die Auswerteeinheit übermittelt, das den Zeitpunkt der Beendigung des Trennschnittes anzeigt. Über die Geschwindigkeit V_{S} des Metallstranges, welche von der Auswerteeinheit anhand der Sequenz an Einzelbildern selbsttätig ermittelt wird, sowie aus der räumlichen Position, an der der betreffende Trennschnitt erfolgt ist, kann die Auswerteeinheit zunächst die Länge jenes Abschnittes des Metallstranges bestimmen, der sich von dem Erfassungsbereich des Sensors bis zur Position des erfolgten Trennschnittes (Strangkopf) erstreckt. Diese Schnittposition kann der Auswerteeinheit bekannt gemacht werden, indem sie ebenfalls beispielsweise von der Anlagenautomation der Stranggießanlage an die Auswerteeinheit übermittelt wird.

Weiterhin kann die Auswerteeinheit anhand der Sequenz an Einzelbildern, die von dem Sensor permanent an die Auswerteeinheit übermittelt werden, die Position des Strangkopfes im Auslaufbereich der Stranggießanlage mitverfolgen. Zudem ist die Auswerteeinheit durch die laufende Bestimmung der geometrischen Abmessungen jenes Teiles des Endlosstranges, der den Erfassungsbereich des Sensors durchlaufen hat, in der Lage, das Volumen bzw. das Gewicht dieses Abschnitts des Endlosstranges laufend neu zu bestimmen. Dementsprechend kann die Auswerteeinheit ein Triggersignal zur Auslösung eines weiteren Trennschnittes an eine externe Automationseinheit (z.B. wiederum die Anlagenautomation der Stranggießanlage, wenn diese die Trennvorrichtung ansteuert) abgeben, sobald der Strangkopf des Endlosstranges eine Position erreicht hat, die einer gewünschten Länge bzw. einem gewünschten Produktionsgewicht entspricht. Somit kann durch die laufende Evaluierung der tatsächlichen geometrischen Abmessungen des Endlosstranges noch vor einem erfolgten Trennschnitt ein vorgegebenes Gewicht eines abzutrennenden Metallstranges mit besserer Genauigkeit eingestellt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Gleiche Details sind dabei in allen Figuren jeweils mit denselben Bezeichnern gekennzeichnet. Weiterhin sind in allen Figuren jeweils der räumliche Verlauf der zueinander orthogonalen Produktionsrichtung X, Querrichtung Y und Höhenrichtung Z dargestellt. Es zeigen:
FIG 1 eine Seitenansicht einer Stranggießanlage mit einer schematischen Anordnung einer erfindungsgemäßen Vorrichtung,
FIG 2 eine perspektivische Darstellung eines Auslaufbereiches einer Stranggießanlage mit einem ersten Ausführungsbeispiel der erfindungsgemäßen Vorrichtung,
FIG 3 eine perspektivische Darstellung eines Auslaufbereiches einer Stranggießanlage mit einem zweiten Ausführungsbeispiel der erfindungsgemäßen Vorrichtung,
FIG 4 eine andere Darstellung des in FIG 3 gezeigten Auslaufbereiches mit einer künstlichen Perspektive,
FIG 5 einen Oberflächenbereich eines Metallstranges mit einer Textur in verschiedenen Bildern einer Sequenz, und
FIG 6 schematisch die Rekonstruktion eines Gießquerschnittes aus einem projizierten Lichtmuster

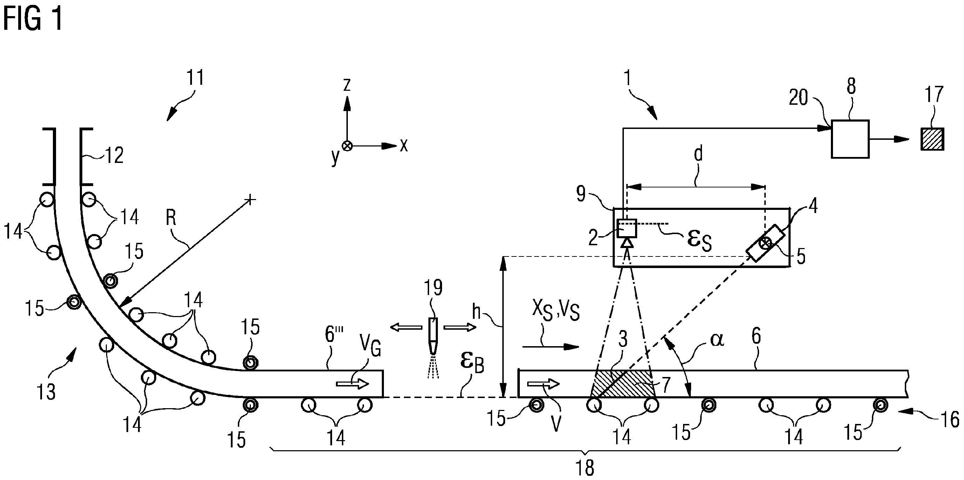

Figur 1 (FIG 1) zeigt eine Stranggießanlage 11, aufweisend eine Kokille 12 zur Erzeugung eines Gießstranges, einen aus Stützrollen 14 und Treiberrollen 15 gebildeten Gießbogen 13 mit einem Gießbogenradius R, einen ebenfalls Stützrollen 14 und Treiberrollen 15 aufweisenden Rollgang 16 eines Auslaufbereiches 18 und eine Trennvorrichtung 19. Durch Einbringen von flüssiger Metallschmelze in die Kokille 12 wird ein Endlosstrang 6‴ mit rechteckigem Gießquerschnitt 17 erzeugt, wobei der Endlosstrang 6‴ entgegen der Höhenrichtung Z im Wesentlichen vertikal aus der Kokille 12 austritt und mit Hilfe des Gießbogens 13 in eine im Wesentlichen horizontal verlaufende Produktionsrichtung X umgelenkt wird. Der Endlosstrang 6‴ bewegt sich entsprechend der pro Zeiteinheit durch die Kokille 12 durchtretenden Menge an Metallschmelze mit einer Gießgeschwindigkeit V_{G} durch den Gießbogen 13 und durch den Auslaufbereich 18. Dabei dienen die Stützrollen 14 und Treiberrollen 15 der mechanischen Stützung und Umlenkung des im Inneren noch flüssigen Endlosstranges 6‴. Zudem dienen die Treiberrollen 15 durch Aufbringen einer tangentialen Kraftkomponente auf die bereits erstarrte Strangschale dem Ausziehen des Endlosstranges 6‴ aus der Kokille 12 bzw. aus dem Gießbogen 13. Die Durcherstarrung des Endlosstranges 6‴ wird weiterhin durch Kühleinrichtungen, die in Zwischenräumen zwischen den einzelnen Stützrollen 14 und Treiberrollen 15 angeordnet sein können (in FIG 1 nicht dargestellt), unterstützt.

Mittels einer Trennvorrichtung 19 - beispielsweise in Form einer Brennlanze - werden von dem Endlosstrang 6‴ sukzessive Metallstränge 6 mit gewünschter Länge abgetrennt, wobei die Trennvorrichtung normal zur Produktionsrichtung X entlang einer horizontal verlaufenden Querrichtung Y bewegt wird. Um eine Unterbrechung des Gießvorganges zu vermeiden, wird der Endlosstrang 6‴ auch während des Trennvorganges aus dem Gießbogen 13 bzw. aus der Kokille 12 mit unveränderter Gießgeschwindigkeit V_{G} ausgezogen, wobei die Trennvorrichtung 19 entsprechend der Gießgeschwindigkeit V_{G} zusätzlich zur Querbewegung auch in Produktionsrichtung X mit dem Endlosstrang 6‴ mitbewegt wird. Nach erfolgtem Trennvorgang wird die Trennvorrichtung 19 sowohl in Produktionsrichtung X als auch in Querrichtung Y wieder in ihre Ausgangsposition zurückgefahren, wobei in FIG 1 der Verfahrbereich der Trennvorrichtung 19 in Produktionsrichtung X durch zwei horizontale Pfeile gekennzeichnet ist.

Der abgetrennte Metallstrang 6 wird mittels der Stützrollen 14 und Treiberrollen 15 des Rollganges 16 in Produktionsrichtung X aus dem Auslaufbereich 18 abtransportiert und dabei von den Treiberrollen 15 auf eine Vereinzelungsgeschwindigkeit V beschleunigt, die höher als die Gießgeschwindigkeit V_{G} des Endlosstranges 6‴ ist. Die Längsrichtung X_{S} des Metallstranges 6 stimmt dabei mit der Produktionsrichtung X überein.

Die obenliegende Tangentialebene an die Stützrollen 14 und Treiberrollen 15 des Rollganges 16 bildet eine Auflageebene ε_{B}, auf welcher ein Metallstrang 6 aufliegt und unterstützt wird. In einer Höhe h oberhalb der Auflageebene ε_{B} ist ein bildgebender Sensor 2 einer erfindungsgemäßen Vorrichtung 1 angeordnet. Das bilderzeugende Element des Sensors 2 (z.B. CCD- oder CMOS-Chip) weist eine normal zur Höhenrichtung Z orientierte Sensorebene ε_{S} auf und ist in einem Schutzgehäuse 9 angeordnet. Das Schutzgehäuse 9 umgibt und schützt den Sensor 2 und eine Projektionsvorrichtung 4 vor Staub, Schmutz und Dampf (z.B. durch Erzeugung eines Überdrucks im Gehäuseinneren) und ist zur aktiven Kühlung des Sensors 2, z.B. in Form einer Wasserkühlung, eingerichtet.

Von dem Sensor 2 wird ein Oberflächenbereich 7 (in FIG 1 mit Schraffierung gekennzeichnet) des Metallstranges 6 optisch erfasst. Im gleichen Schutzgehäuse 9 wie der Sensor 2 ist auf der von der Trennvorrichtung 19 angewandten Seite des Sensors 2 in Produktionsrichtung X in einem Abstand d zum Sensor 2 und ebenfalls in einer Höhe h oberhalb der Auflageebene ε_{B} die Projektionsvorrichtung 4 angeordnet. Die Projektionsvorrichtung 4 umfasst eine Lichtquelle 5, welche ein Lichtmuster 3 auf den von dem Sensor erfassten Oberflächenbereich 7 des Metallstranges 6 projiziert, wobei das Lichtmuster 3 auf der Oberseite des einen rechteckigen Gießquerschnitt 17 aufweisenden Metallstranges 6 als Linie entlang der Querrichtung Y (in FIG 1 nicht sichtbar) und entlang der in FIG 1 sichtbaren Außenfläche des Metallstranges 6 als in einem Winkel α zur Produktionsrichtung X geneigte Line verläuft.

Alternativ (in FIG 1 nicht dargestellt) können der Sensor 2 und die Projektionsvorrichtung 4 jeweils in einem eigenen Gehäuse untergebracht werden, wobei diese beiden Gehäuse mechanisch besonders starr in Relation zueinander angeordnet sein müssen, sodass sich die relative Position des Sensors 2 zur Projektionsvorrichtung 4 während des Produktionsbetriebes an der Gießanlage 11 - etwa aufgrund von Vibrationen - nicht ändert. Beispielsweise können zwei Schutzgehäuse über entsprechend massive mechanische Verbindungselemente unmittelbar miteinander verbunden sein.

Der Sensor 2 ist mit einer Auswerteeinheit 8 datentechnisch verbunden und generiert in zeitlicher Abfolge eine Sequenz 20 aus einzelnen zweidimensionalen Bildern von dem erfassten Oberflächenbereich 7 mit dem darauf projizierten Lichtmuster 3. Die Sequenz 20 aus Bildern wird vom Sensor 2 über die datentechnische Verbindung an die Auswerteeinheit 8 übermittelt, die daraus an einer Vielzahl von Positionen (korrespondierend zu den einzelnen Bildern) entlang einer Längsrichtung X_{S} des Metallstranges 6 jeweils einen Profilschnitt ermittelt. Auch wenn die auf den Metallstrang 6 projizierten Profilschnitte im gegenständlichen Beispiel entlang der Produktionsrichtung X verkippt sind, kann die Auswerteeinrichtung 8 beispielsweise durch eine räumliche Interpolation der Gesamtheit der für den Metallstrang 6 ermittelten Profilschnitte jeweils Gießquerschnitte (d.h. Schnitte normal zur Längsrichtung X_{S} des Metallstranges 6) an beliebigen Positionen entlang der Längsrichtung X_{S} des Metallstranges 6 zu rekonstruieren. Dementsprechend können auch die geometrischen Abmessungen des Metallstranges 6 entlang seiner Längsrichtung X_{S} mit einer räumlichen Auflösung ermittelt werden, die dem Abstand zwischen den einzelnen Profilschnitten relativ zur Oberfläche des Metallstranges 6, die jeweils in den einzelnen Bildern der Sequenz 20 erfasst werden, entspricht. Weiterhin kann mittels der Auswerteeinheit 8 aus den Bildern der Sequenz 20 die Vereinzelungsgeschwindigkeit V des Metallstranges 6, mit der sich dieser durch den Auslaufbereich 18 bewegt, ermittelt werden.

In dem in FIG 1 nicht dargestellten Fall, dass eine Abtrennung des Metallstranges 6 von dem Endlosstrang 6‴ noch nicht oder noch nicht vollständig erfolgt ist, bewegt sich der in den Erfassungsbereich des Sensors 2 ragende Teil des Endlosstranges 6‴ noch mit der geringeren Gießgeschwindigkeit V_{G} durch den Auslaufbereich 18. Auch in diesem Fall kann mittels der Auswerteeinheit 8 aus den Bildern der Sequenz 20 dessen - noch geringere - Gießgeschwindigkeit V_{G} ermittelt werden. Auch eine Ermittlung einer Momentangeschwindigkeit während der Beschleunigungsphase von der Gießgeschwindigkeit V_{G} auf die Vereinzelungsgeschwindigkeit V ist bei entsprechendem zeitlichem Abstand zwischen den einzelnen Bildern der Sequenz 20 möglich. Die möglichen Geschwindigkeiten, mit denen sich ein Metallstrang 6 bzw. ein Abschnitt eines Endlosstranges 6‴ durch den Auslaufbereich bewegt, wird folglich in FIG 1 mit dem Symbol V_{S} dargestellt.

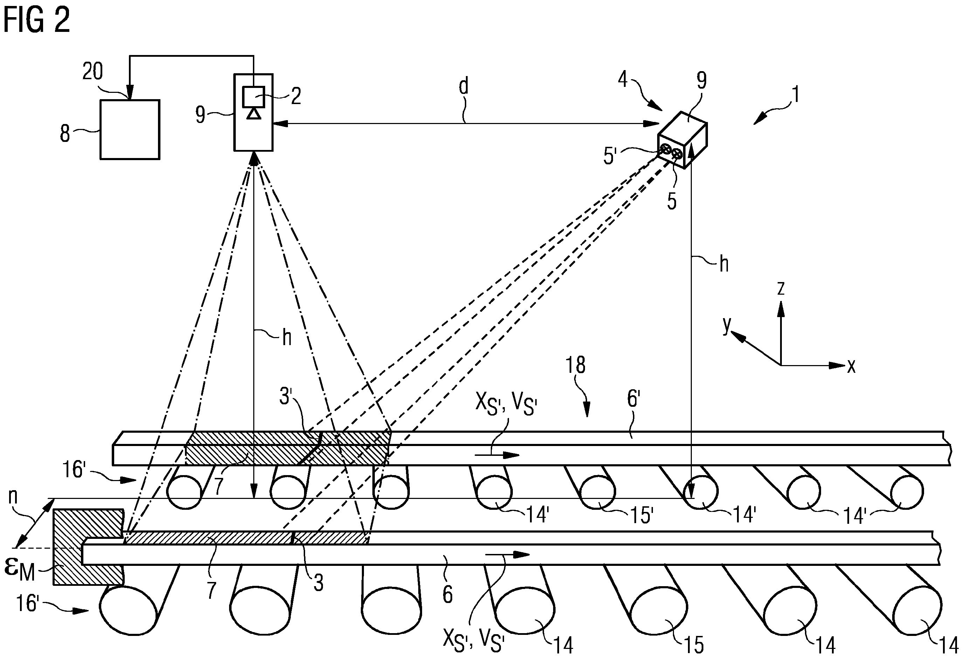

Figur 2 (FIG 2) zeigt ein erstes Ausführungsbeispiel der erfindungsgemäßen Vorrichtung 1, welches einen Sensor 2 und eine Projektionsvorrichtung 4 mit jeweils einem eigenen Schutzgehäuse 9 umfasst. Die Projektionsvorrichtung 4 weist zwei Lichtquellen 5 und 5' auf und ist in einem Abstand d in Produktionsrichtung X von dem Sensor 2 beabstandet. Der Sensor 2 und die Projektionsvorrichtung 4 sind jeweils in einer Höhe h oberhalb eines Auslaufbereiches 18 einer Stranggießanlage angeordnet. Weiterhin sind der Sensor 2 und die Projektionsvorrichtung 4 jeweils in Querrichtung Y in einem Normalabstand n zu einer vertikalen Mittenebene ε_{M} durch einen ersten Metallstrang 6 beabstandet, wobei der Normalabstand n kleiner als der Abstand zwischen dem ersten und einem zweiten Metallstrang 6 und 6' in Querrichtung Y zueinander ist. Beispielsweise sind der Sensor 2 und die Projektionsvorrichtung 4 in Querrichtung Y mittig zwischen den Metallsträngen 6 und 6' angeordnet. Beide Metallstränge 6 und 6' weisen einen rechteckigen Gießquerschnitt auf und werden jeweils in Höhenrichtung Z von entsprechenden Stützrollen 14 bzw. 14' eines ersten bzw. zweiten Rollganges 16, 16' des Auslaufbereiches 18 unterstützt und von entsprechenden Treiberrollen 15 bzw. 15' in Produktionsrichtung X angetrieben.

Der erste und der zweite Metallstrang 6, 6' bewegen sich parallel zueinander und jeweils mit einer Geschwindigkeit V_{S} bzw. V_{S}' entlang der Produktionsrichtung X durch den Auslaufbereich 18. Die jeweilige Längsrichtung X_{S}, X_{S}' der Metallstränge 6, 6' ist ebenfalls in Produktionsrichtung X orientiert. Da die Gießprozesse der Metallstränge 6 und 6' relativ zueinander unterschiedlich schnell ablaufen können, können sich auch deren Geschwindigkeit V_{S} und V_{S}' voneinander unterscheiden.

Die Projektionsvorrichtung 4 projiziert mittels der Lichtquelle 5 ein erstes Lichtmuster 3 auf den ersten Metallstrang 6 und mittels der zweiten Lichtquelle 5' ein zweites Lichtmuster 3' auf den zweiten Metallstrang 6'. Der Sensor 2 erfasst aufgrund seiner mittigen Anordnung in Querrichtung Y zwischen den Metallsträngen 6 und 6' sowohl einen Oberflächenbereich 7 des ersten Metallstranges 6 mit dem darauf projizierten Lichtmuster 3 als auch einen Oberflächenbereich 7' des zweiten Metallstranges 6' mit dem darauf projizierten Lichtmuster 3'. Die von dem Sensor 2 generierte Sequenz 20 zeigt in den einzelnen Bildern folglich die Oberflächenbereiche 7 und 7' beider Metallstränge 6 und 6' mit dem jeweils darauf projizierten Lichtmuster 3 bzw. 3'. Über eine datentechnische Verbindung übermittelt der Sensor 2 die Sequenz 20 an eine Auswerteeinheit 8. Für die Ermittlung der Gießquerschnitte der jeweiligen Metallstränge 6, 6' muss jedoch deren Punktsymmetrie in einer Ebene normal zur jeweiligen Längsrichtung X_{S} bzw. X_{S}' angenommen werden, da sich die erfassten Oberflächenbereiche 7, 7' nur bis zu maximal 50% des Umfanges entlang einer jeweiligen Umfangsrichtung erstrecken.

Das in FIG 2 gezeigte erste Ausführungsbeispiel ist in einfacher Weise auf eine beliebige Anzahl von Metallsträngen skalierbar: für die Vermessung eines jeden Paares an benachbarten Metallsträngen in einem Auslaufbereich einer Stranggießanlage werden nur ein einziger Sensor und eine einzige Projektionsvorrichtung benötigt. Somit wird für eine Stranggießanlage, die für eine gerade Anzahl von 2N (mit N als natürlicher Zahl) gleichzeitig produzierbarer Metallstränge eingerichtet ist, nur eine Anzahl von N Sensoren, N Projektionsvorrichtungen und eine einzige Auswerteeinheit benötigt, um alle 2N Metallstränge vermessen zu können. In analoger Weise wird für eine Stranggießanlage mit einer ungeraden Anzahl von 2N+1 Metallsträngen eine Anzahl von N+1 Sensoren, N+1 Projektionsvorrichtungen und wiederum einer einzigen Auswerteeinheit benötigt. Voraussetzung für eine derartige Skalierung ist lediglich eine ausreichende Rechenleistung der Auswerteeinheit, um die N bzw. N+1 gleichzeitig generierten Sequenzen der jeweiligen Sensoren verarbeiten zu können.

Das erste Ausführungsbeispiel gemäß FIG 2 kann auch dahingehend abgewandelt werden, dass für jeden zu vermessenden Metallstrang eine erfindungsgemäße Vorrichtung mit genau einem Sensor und genau einer Projektionsvorrichtung verwendet wird, wobei jeder Sensor einen Oberflächenbereich genau eines Metallstranges erfasst und jede Projektionsvorrichtung nur eine Lichtquelle zur Projektion genau eines Lichtmusters auf denselben, einen Metallstrang aufweist. Bei dieser zweiten Variante des ersten Ausführungsbeispiels kann der optische Blickwinkel des Sensors, unter dem der eine Oberflächenbereich erfasst wird, im Wesentlichen auf die Abmessungen des maximal möglichen Gießquerschnittes eines zu vermessenden Metallstranges eingeschränkt werden. Dadurch wird vorteilhaft eine höhere räumliche Auflösung des Oberflächenbereiches und dementsprechend eine noch genauere Bestimmung der geometrischen Abmessungen eines zu vermessenden Metallstranges erreicht.

Beiden geschilderten Varianten des ersten Ausführungsbeispiels ist gemeinsam, dass die Sensoren und Projektionsvorrichtungen in Querrichtung Y jeweils in einem Normalabstand n zu einer vertikalen Mittenebene ε_{M} durch einen Metallstrang beabstandet sind, und dass für die Ermittlung der geometrischen Abmessungen von Metallsträngen jeweils eine Punktsymmetrie in einem Gießquerschnitt durch den betreffenden Metallstrang angenommen wird.

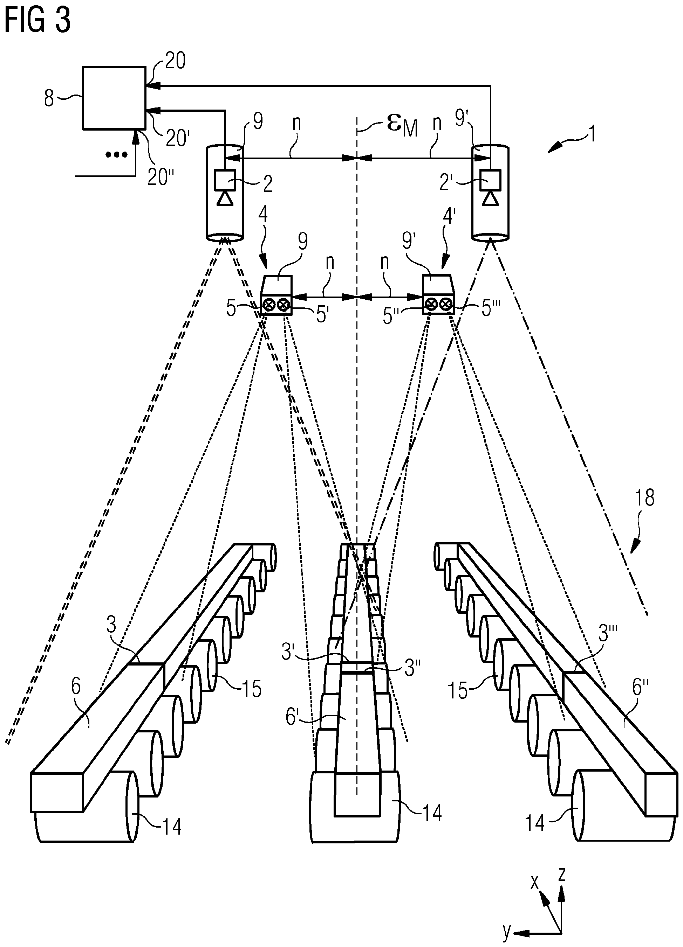

Figur 3 (FIG 3) zeigt beispielhaft ein zweites Ausführungsbeispiel der erfindungsgemäßen Vorrichtung 1 in einer perspektivischen Darstellung in Produktionsrichtung X eines Auslaufbereiches 18 einer Stranggießanlage. Die Vorrichtung 1 umfasst zumindest einen ersten und einen zweiten Sensor 2 bzw. 2' zur Erzeugung einer ersten und einer zweiten Sequenz 20 bzw. 20' zweidimensionaler Bilder. Weiterhin umfasst die Vorrichtung 1 eine erste Projektionsvorrichtung 4 mit zwei Lichtquellen 5 und 5' sowie eine zweite Projektionsvorrichtung 4' mit ebenfalls zwei Lichtquellen 5" bzw. 5‴. Die Sensoren 2 und 2' sowie die Projektionsvorrichtungen 4 und 4' sind jeweils in einem eigenen Schutzgehäuse 9, 9' angeordnet. Wiederum sind die beiden Schutzgehäuse 9, 9' für den ersten Sensor 2 und die erste Projektionsvorrichtung 4 bzw. für den zweiten Sensor 2' und die zweite Projektionsvorrichtung 4' jeweils mechanisch starr zueinander angeordnet. Die Erfassungsbereiche des ersten bzw. zweiten Sensors 2, 2' sind mit einer doppelt strichlierten Linie bzw. mit einer strichpunktierten Linie dargestellt. Mittels der Lichtquellen 5, 5', 5" bzw. 5‴ wird jeweils ein entsprechendes Lichtmuster 3, 3', 3" bzw. 3‴ auf einen der sich durch den Auslaufbereich 18 bewegenden Metallstränge 6, 6' bzw. 6" mit jeweils rechteckigem Gießquerschnitt projiziert, wobei auf den in FIG 3 mittig abgebildeten Metallstrang 6' sowohl das Lichtmuster 3' der ersten Projektionsvorrichtung 4 als auch das Lichtmuster 3" der zweiten Projektionsvorrichtung 4' projiziert wird. Da der erste und der zweite Sensor 2, 2' sowie die erste und die zweite Projektionsvorrichtung 4, 4' in FIG 3 jeweils in einem Normalabstand n und auf gegenüberliegenden Seiten zu einer vertikalen Mittenebene ε_{M} (in FIG 3 durch eine punktiert Linie dargestellt) durch den Metallstrang 6' angeordnet sind, wird einerseits eine mehr als 50-prozentige Überdeckung des Metallstranges 6' entlang seiner Umfangsrichtung durch die Lichtmuster 3' und 3" erreicht. Andererseits werden durch eine Kombination von Bildern der Sequenzen 20 und 20' des ersten und zweiten Sensors 2 und 2' in Umfangsrichtung mehr als 50% des Metallstranges 6' erfasst.

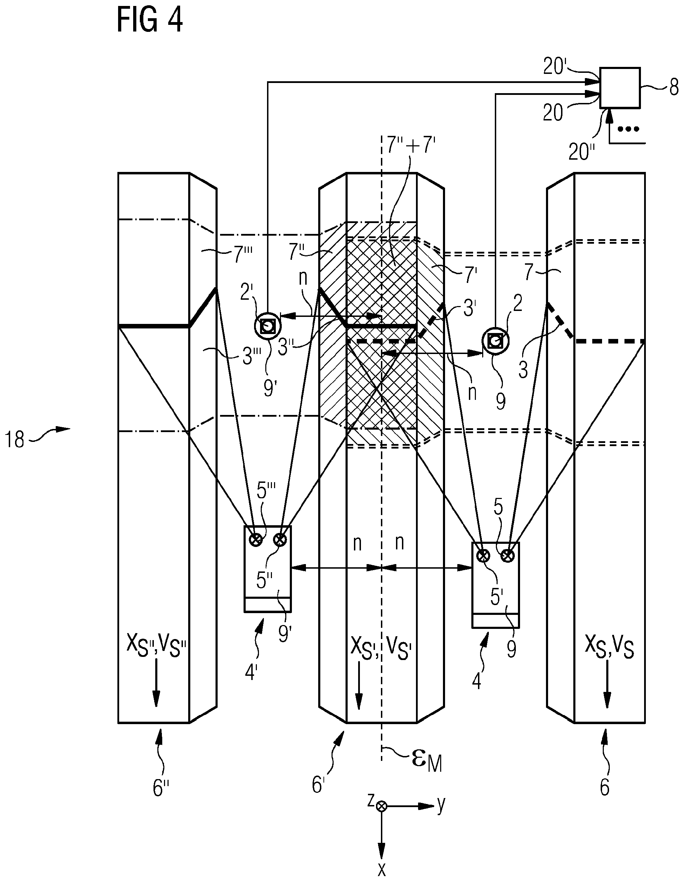

Figur 4 (FIG 4) zeigt dieselbe Anordnung wie FIG 3 von einem Blickpunkt oberhalb des Auslaufbereiches 18, wobei der mittlere Metallstrang 6' zur Verdeutlichung des kombinierten Erfassungsbereiches des ersten und zweiten Sensors 2, 2' perspektivisch nicht korrekt dargestellt ist, indem beide vertikal orientierten Seitenflächen sichtbar dargestellt sind: die von der ersten Projektionsvorrichtung 4 auf den rechten und mittleren Metallstrang 6 bzw. 6' projizierten, linienförmigen Lichtmuster 3 und 3' sind jeweils mit einer strichlierten Linie dargestellt, während die von der zweiten Projektionsvorrichtung 4' auf den mittleren und linken Metallstrang 6' bzw. 6" projizierten, ebenfalls linienförmigen Lichtmuster 3" und 3‴ zur besseren Unterscheidbarkeit jeweils mit einer durchgezogenen Linie dargestellt sind. Von dem ersten Sensor 2 wird gleichzeitig ein Oberflächenbereich 7 des rechten Metallstranges 6 sowie ein Oberflächenbereich 7' des mittleren Metallstranges 6' (in FIG 4 mit schräg nach rechts unten gerichteter Schraffierung gekennzeichnet) erfasst. Weiterhin wird von dem zweiten Sensor 2' gleichzeitig ein Oberflächenbereich 7" des mittleren Metallstranges 6' (in FIG 4 mit schräg nach rechts oben gerichteter Schraffierung gekennzeichnet) sowie ein Oberflächenbereich 7‴ des linken Metallstranges 6" erfasst. Die Grenzen des Erfassungsbereiches des ersten Sensors 2 in Produktionsrichtung X sind mit einer doppelt strichlierten Linie gekennzeichnet, wohingegen die entsprechenden Grenzen des Erfassungsbereiches des zweiten Sensors 2' in Produktionsrichtung X mit einer strichpunktierten Linie gekennzeichnet sind.

In FIG 4 ist zu erkennen, dass von dem mittleren Metallstrang mit rechteckigem Gießquerschnitt in Umfangsrichtung insgesamt drei Außenflächen erfasst werden. Dabei stellt die obenliegende Außenfläche den Überlappungsbereich der Lichtmuster 3' und 3" sowie der beiden von dem ersten und zweiten Sensor 2, 2' erfassten Oberflächenbereiche 7' und 7" dar. Weiterhin ist anhand dreier vertikal verlaufender Pfeile der Verlauf der jeweiligen Längsrichtung X_{S}, X_{S}', X_{S}" bzw. der jeweiligen Geschwindigkeit V_{S}, V_{S}', V_{S}" der Metallstränge 6, 6' und 6" angedeutet, wobei sich die einzelnen Geschwindigkeiten V_{S}, V_{S}' und V_{S}" wiederum voneinander unterscheiden können.

Weiterhin müssen die Sensoren 2 und 2' sowie die Projektionsvorrichtungen 4 und 4' nicht zwangsläufig - so wie in FIG 3 und 4 dargestellt - jeweils im gleichen Normalabstand n zu einer vertikalen Normalebene ε_{M} beabstandet sein; entscheidend bei einem zweiten Ausführungsbeispiel ist lediglich, dass zumindest ein Metallstrang zu mehr als 50% entlang seiner Umfangsrichtung von einem Lichtmuster bedeckt und von Sensoren erfasst wird, sodass eine Punktsymmetrie des betreffenden Metallstranges nicht vorausgesetzt werden muss.

In FIG 3 und FIG 4 ist aus Gründen der Übersichtlichkeit nur die Erfassung des mittleren Metallstranges 6' durch mehr als einem Sensor gezeigt. In analoger Weise können jedoch durch entsprechende Anordnung weiterer Projektionsvorrichtungen und weiterer Sensoren auch mehrere, bevorzugt alle, in einem Auslaufbereich 18 befindliche Metallstränge von zumindest zwei Sensoren erfasst werden. Dies ist in FIG 3 und FIG 4 durch eine weitere Sequenz 20" (mit Punktierung) angedeutet, die an eine Auswerteeinheit 8 übermittelt wird. Demgemäß weist eine Variante des zweiten Ausführungsbeispiels der erfindungsgemäßen Vorrichtung 1, bei der jeder von N in Querrichtung Y eines Auslaufbereiches 18 benachbart angeordneten Metallsträngen von mehreren Sensoren aus verschiedenen räumlichen Perspektiven erfasst wird, zumindest N+1 Sensoren und N+1 (mit N als natürlicher Zahl) Projektionsvorrichtungen mit jeweils zumindest zwei Lichtquellen auf, wobei jeder der Sensoren Oberflächenbereiche von zwei in Querrichtung Y benachbarten Metallsträngen erfasst.

In einer Variante des zweiten Ausführungsbeispiels, gemäß der - wie bereits im Rahmen des ersten Ausführungsbeispiels beschrieben - von jedem Sensor nur ein einziger Oberflächenbereich von einem Metallstrang erfasst wird, werden dementsprechend doppelt so viele Sensoren wie zu vermessende Metallstränge benötigt. Den geschilderten Varianten des zweiten Ausführungsbeispiels ist gemeinsam, dass für die Ermittlung der geometrischen Abmessungen von jenen Metallsträngen, die entlang ihrer Umfangsrichtung zu mehr als 50% von mehreren Lichtmustern bedeckt und von mehreren Sensoren erfasst werden, jeweils keine Punktsymmetrie in einer Ebene normal zu ihrer Längsrichtung vorausgesetzt werden muss.

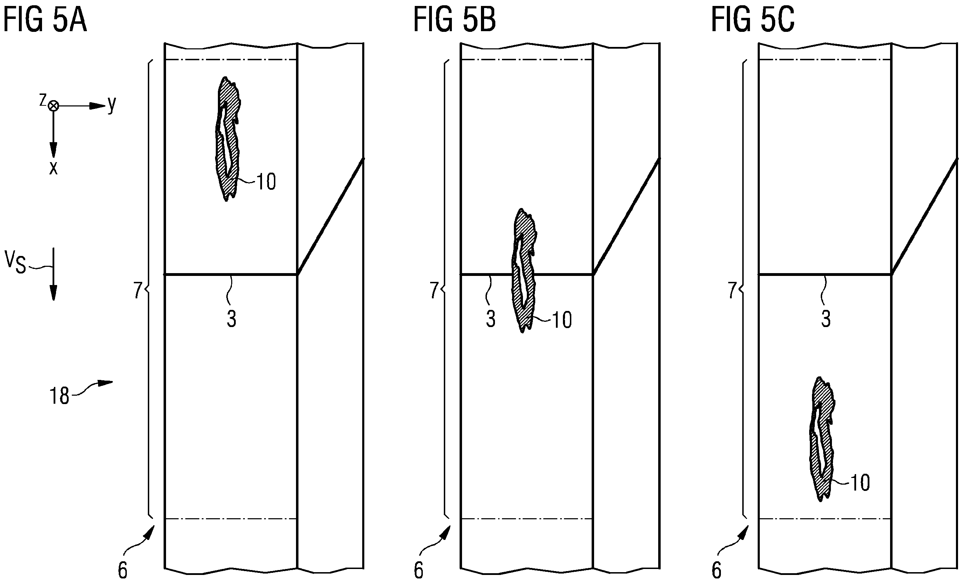

Figur 5 (FIG 5) zeigt zeitlich aufeinanderfolgende Bilder eines Ausschnittes eines sich mit einer Geschwindigkeit V_{S} in Produktionsrichtung X bewegenden Metallstranges 6 mit rechteckigem Gießquerschnitt. Auf die Oberfläche des Metallstranges 6 wird ein linienförmiges, entlang der Querrichtung Y orientiertes Lichtmuster 3 projiziert. Ein von einem Sensor erfasster Oberflächenbereich 7 des Metallstranges 6 ist durch eine strichpunktierte Linie angedeutet. In FIG 5a ist eine auf der Oberfläche des Metallstranges 6 befindliche Textur 10 - in Produktionsrichtung X gesehen - vor dem Lichtmuster 3 dargestellt. Aufgrund der Bewegung des Metallstranges 6 relativ zu einem Auslaufbereich 18 und dem projizierten Lichtmuster 3 wandert die Textur 10 entlang der Produktionsrichtung X mit dem Metallstrang 6 mit und kommt in den in FIG 5b bzw. FIG 5c dargestellten, zeitlich nachgeordneten Bildern auf gleicher Höhe mit bzw. hinter dem Lichtmuster 3 zu liegen. Durch genaue räumliche Verortung der Textur 10 in den einzelnen Bildern, vor allem relativ zu dem ebenfalls sichtbaren Lichtmuster 3, kann mit Hilfe des zeitlichen Abstandes zwischen einzelnen Bildern die Geschwindigkeit V_{S} des Metallstranges in einer Richtung tangential zu einer den Bildern entsprechenden Sensorebene ermittelt werden.

Weiterhin kann die Ermittlung der Geschwindigkeit V_{S} verbessert werden, wenn bei der räumlichen Verortung der Textur 10 in den einzelnen Bildern perspektivische oder optische Verzerrungen berücksichtigt werden. So können beispielsweise perspektivische Verzerrungen anhand der Höhe h, in der der bilderzeigende Sensor oberhalb des Auslaufbereiches 18 angeordnet ist, aus dem optischen Erfassungswinkel des Sensors (abhängig von der Brennweite des abbildenden Sensorobjektivs und den Sensorabmessungen) sowie aus dem Verlauf der optischen Achse des Sensors (z.B. entlang der Höhenrichtung Z) berücksichtigt werden. Verzerrungen des Sensorobjektivs selbst können mittels eines Kalibrierungsbildes berücksichtigt werden, bei dem von dem betreffenden Sensor beispielsweise ein geometrisches Testmuster mit bekannten Abmessungen erfasst wird.

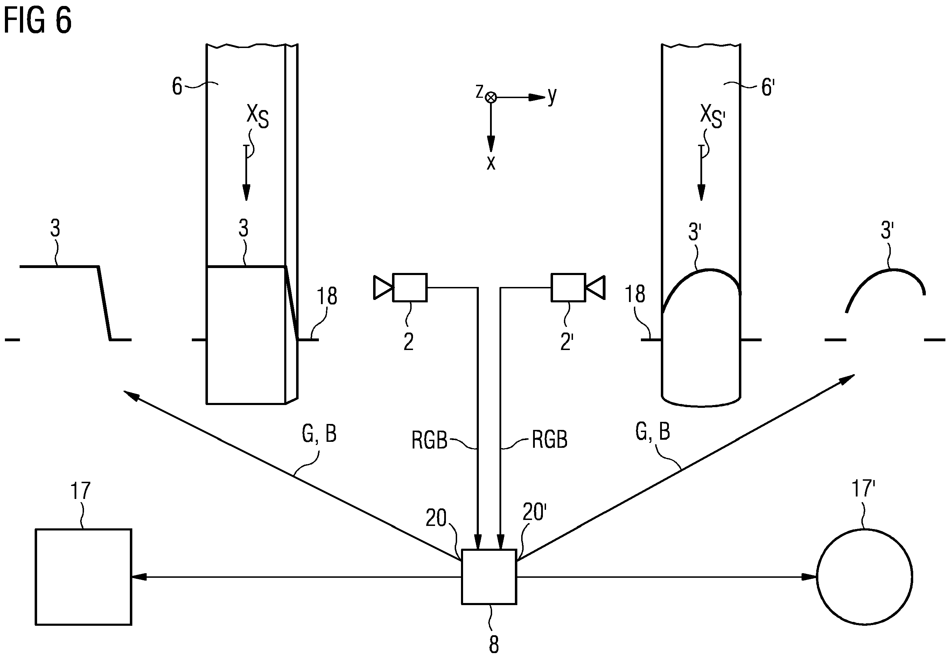

Figur 6 (FIG 6) zeigt in einem Auslaufbereich 18 schematisch einen Metallstrang 6 mit rechteckigem Gießquerschnitt und einen Metallstrang 6' mit ovalem Gießquerschnitt aus einer möglichen Perspektive eines ersten bzw. zweiten Sensors 2, 2' oberhalb des Auslaufbereichs 18. Die Längsrichtung X_{S}, X_{S}' beider Metallstränge 6 und 6' verläuft jeweils entlang der Produktionsrichtung X. Auf die Metallstränge 6 und 6' wird jeweils (von einer in einem Abstand entgegen der Produktionsrichtung X und in FIG 6 nicht weiter dargestellten Projektionsvorrichtung) ein in Querrichtung Y orientiertes linienförmiges Lichtmuster 3 bzw. 3' projiziert. Die Sensoren 2 und 2' sind in FIG 6 nur symbolisch dargestellt und erfassen jeweils ausschließlich einen Oberflächenbereich des Metallstranges 6 mit rechteckigem bzw. des Metallstranges 6' mit ovalem Gießquerschnitt und die jeweils darauf projizierten Lichtmuster 3 bzw. 3' (mittlere obere Bilder in FIG 6). Die in Querrichtung Y über den jeweiligen Metallstrang 6 bzw. 6' hinausgehenden waagrechten Abschnitte der Lichtmuster 3 bzw. 3' werden von dem Auslaufbereich 18 reflektiert und bei der Ermittlung der Gießquerschnitte von der Auswerteeinheit 8 verworfen.

Die von den Sensoren generierten Sequenzen 20, 20' an Bildern werden an eine Auswerteeinheit 8 übertragen. Die Auswerteeinheit 8 trennt in jedem Bild das Lichtmuster 3 bzw. 3' von der in den Bildern ebenfalls erfassten heißen Oberfläche des jeweiligen Metallstranges 6 bzw. 6', wobei bevorzugt eine Lichtquelle mit einer Wellenlänge von 370nm bis 550nm zur Erzeugung der Lichtmuster 3 bzw. 3' verwendet wird. Weiterhin werden bevorzugt solche Sensoren 2, 2' eingesetzt, die zur Erzeugung von Farbbildern geeignet sind, was durch die Symbole 'RGB' in FIG 6 angedeutet wird. Die Auswerteeinheit 8 zerlegt die Bilder der Sequenzen 20, 20' in ihre einzelnen Farbkanäle und rekonstruiert die Lichtmuster 3 bzw. 3' bevorzugt aus den grünen und/oder blauen Farbkanälen der Bilder, was in FIG 6 durch die links oben bzw. rechts oben dargestellte Kontur der Lichtmuster 3 bzw. 3' und die Symbole 'G,B' angedeutet ist.

Die räumliche Anordnung der Sensoren 2 bzw. 2' und der (in FIG 6 nicht näher dargestellten Projektionsvorrichtungen zur Erzeugung der Lichtmuster 3 bzw. 3') in Bezug auf den Auslaufbereich 18 ist der Auswerteeinheit 8 bekannt. Folglich ist die Auswerteeinheit 8 in der Lage, die räumlichen Koordinaten jedes Punktes eines aus einem Bild extrahierten Lichtmusters 3 bzw. 3' zu rekonstruieren. Insbesondere ist die Auswerteeinheit 8 in der Lage, das Gießprofil 17 bzw. 17' der in FIG 6 dargestellten Metallstränge 6 und 6' in einer Ebene normal zu deren Längsrichtung X_{S}, X_{S}' an einer Vielzahl von Positionen entlang der Längsrichtung X_{S} aus einzelnen Bildern einer Sequenz 20, bzw. 20' zu rekonstruieren (linkes bzw. rechtes unteres Bild in FIG 6). In FIG 6 wird ein Oberflächenbereich jedes Metallstranges 6, 6' nur von einem Sensor 2 bzw. 2' erfasst, sodass in den Einzelbildern der Sequenz 20 bzw. 20' nur zwei Außenflächen des Metallstranges 6 (mit rechteckigem Gießquerschnitt) bzw. aus perspektivischen Gründen etwas weniger als 50% eines Umfangs des Metallstranges 6' (mit ovalem Gießquerschnitt) erfasst werden.

### Bezugszeichenliste

- 1: Vorrichtung zum berührungslosen Vermessen
- 2, 2': Sensor
- 3, 3', 3", 3‴: Lichtmuster
- 4, 4': Projektionsvorrichtung
- 5, 5', 5", 5"': Lichtquelle
- 6, 6', 6": Metallstrang
- 6‴: Endlosstrang
- 7, 7', 7", 7"': Oberflächenbereich
- 8: Auswerteeinheit
- 9, 9': Schutzgehäuse
- 10: Textur
- 11: Stranggießanlage
- 12: Kokille
- 13: Gießbogen
- 14, 14': Stützrolle
- 15, 15': Treiberrolle
- 16, 16': Rollgang
- 17, 17': Gießquerschnitt
- 18: Auslaufbereich
- 19: Trennvorrichtung
- 20, 20', 20": Sequenz
- d: Abstand
- h: Höhe
- n: Normalabstand
- R: Gießbogenradius
- V_{G}: Gießgeschwindigkeit
- V: Vereinzelungsgeschwindigkeit
- V_{S}, V_{S}', V_{S}": Geschwindigkeit Metallstrang
- X_{S}, X_{S}', X_{S}": Längsrichtung
- X: Produktionsrichtung
- Y: Querrichtung
- Z: Höhenrichtung
- α: Winkel
- ε_{B}: Auflageebene
- ε_{M}: vertikale Mittenebene
- ε_{S}: Sensorebene

## Patentansprüche

1. Vorrichtung (1) zum berührungslosen Vermessen zumindest eines, bevorzugt zumindest zweier sich entlang einer Produktionsrichtung (X) einer Stranggießanlage (11) durch einen Auslaufbereich (18) der Stranggießanlage (11) bewegenden Metallstränge (6, 6', 6"), insbesondere im Knüppel- oder Vorblockformat,
- die Vorrichtung (1) umfassend zumindest eine, bevorzugt zumindest zwei Projektionsvorrichtungen (4, 4'), zumindest einen, bevorzugt zumindest zwei Sensoren (2, 2') und eine Auswerteeinheit (8),
- wobei die Projektionsvorrichtung (4, 4') eingerichtet ist, zumindest ein, bevorzugt zumindest zwei Lichtmuster (3, 3', 3", 3‴) auf den Metallstrang (6, 6', 6") zu projizieren,
- wobei der Sensor (2, 2') in einer Höhe (h) oberhalb des Auslaufbereichs (18) anordenbar ist und dazu eingerichtet ist, eine zeitliche Sequenz (20, 20', 20") zweidimensionaler Bilder zu generieren und an die Auswerteeinheit (8) zu übermitteln,
- wobei der Sensor (2, 2') eingerichtet ist, einen sich entlang einer Längsrichtung (X_{S}, X_{S}' , X_{S}") des Metallstranges (6, 6', 6") und in einer Ebene normal zur Längsrichtung (X_{S}, X_{S}', X_{S}") erstreckenden Oberflächenbereich (7, 7', 7", 7‴) des Metallstranges (6, 6', 6") mit dem darauf projizierten Lichtmuster (3, 3', 3", 3‴) zu erfassen,
- wobei die Auswerteeinheit (8) dazu eingerichtet ist, den Oberflächenbereich (7, 7', 7", 7‴) und das darauf projizierte Lichtmuster (3, 3', 3", 3‴) in den einzelnen Bildern der Sequenz (20, 20', 20") zu detektieren,
- wobei die Auswerteeinheit (8) dazu eingerichtet ist, aus der räumlichen Anordnung der Projektionsvorrichtung (4, 4') und des Sensors (2, 2') relativ zu dem Auslaufbereich (18) sowie aus dem Oberflächenbereich (7, 7', 7", 7‴) und dem darauf projizierten Lichtmuster (3, 3', 3", 3‴) die geometrischen Abmessungen des Metallstranges (6, 6', 6") an einer Vielzahl von Positionen entlang der Längsrichtung (X_{S}, X_{S}', X_{S}") des Metallstranges (6, 6', 6") zu ermitteln,
- wobei die Auswerteeinheit (8) dazu eingerichtet ist, individuelle Texturen auf dem Metallstrang (6, 6', 6") in zwei oder mehreren Bildern der Sequenz (20, 20', 20") zu identifizieren, deren relative Bildposition in den zwei oder mehreren aufeinanderfolgenden Bildern zu ermitteln und daraus sowie aus einer Bildfrequenz und einem Abbildungsmaßstab des betreffenden Sensors (2, 2') eine Geschwindigkeit (V_{S}, V_{S}', V_{S}") des Metallstranges (6, 6', 6") relativ zum dem Sensor (2, 2') in Produktionsrichtung (X) anhand eines korrelativen optischen Messverfahrens zu ermitteln, und
- wobei die Projektionsvorrichtung (4, 4') in einem horizontalen Abstand (d) zu dem Sensor (2, 2') anordenbar ist.

2. Vorrichtung (1) nach Anspruch 1, wobei die Projektionsvorrichtung (4, 4') zur Projektion des Lichtmusters (3, 3', 3", 3‴) zumindest eine, bevorzugt zumindest zwei Lichtquellen (5, 5', 5", 5‴) aufweist, die zur Emission von Licht in einem Wellenlängenbereich von 370nm bis 550nm, bevorzugt 430nm bis 520nm, eingerichtet sind und wobei der Sensor (2, 2') als elektronischer Sensor zur Erzeugung von zweidimensionalen Farbbildern ausgestaltet ist.

3. Vorrichtung (1) nach Anspruch 1 oder 2, wobei die Projektionsvorrichtung (4, 4') derart anordenbar ist, dass das Lichtmuster (3, 3', 3", 3‴) in Produktionsrichtung (X) hinter einer Trennvorrichtung (19) der Stranggießanlage (11) auf den Metallstrang (6, 6', 6") projizierbar ist.

4. Vorrichtung (1) nach Anspruch 1 oder 2, wobei die Projektionsvorrichtung (4, 4') derart anordenbar ist, dass das Lichtmuster (3, 3', 3", 3‴) in Produktionsrichtung (X) vor einer Trennvorrichtung (19) der Stranggießanlage (11) auf den Metallstrang (6, 6', 6") projizierbar ist.

5. Verfahren zum berührungslosen Vermessen zumindest eines, bevorzugt zumindest zweier sich entlang einer Produktionsrichtung (X) einer Stranggießanlage (11) durch einen Auslaufbereich (18) der Stranggießanlage (11) bewegenden Metallstränge (6, 6', 6"), insbesondere im Knüppel- oder Vorblockformat, wobei
- wobei mittels zumindest einer, bevorzugt zumindest zweier Projektionsvorrichtungen (4, 4') zumindest ein, bevorzugt zumindest zwei Lichtmuster (3, 3', 3", 3‴) auf den Metallstrang (6, 6', 6") projiziert wird,
- wobei mittels zumindest eines, bevorzugt zumindest zweier Sensoren (2, 2') eine zeitliche Sequenz (20, 20', 20") zweidimensionaler Bilder generiert wird und an eine Auswerteeinheit (8) übermittelt wird,
- wobei die Projektionsvorrichtung (4, 4') in einem horizontalen Abstand (d) zu dem Sensor (2, 2') angeordnet ist,
- wobei von dem Sensor (2, 2') ein sich entlang einer Längsrichtung (X_{S}, X_{S}', X_{S}") des Metallstranges (6, 6', 6") und in einer Ebene normal zur Längsrichtung (X_{S}, X_{S}', X_{S}") erstreckender Oberflächenbereich (7, 7', 7", 7‴) des Metallstranges (6, 6', 6") mit dem darauf projizierten Lichtmuster (3, 3', 3", 3‴) erfasst wird,
- wobei mittels der Auswerteeinheit (8) der Oberflächenbereich (7, 7', 7", 7‴) und das darauf projizierte Lichtmuster (3, 3', 3", 3‴) in den einzelnen Bildern der Sequenz (20, 20', 20") detektiert wird,
- wobei mittels der Auswerteeinheit (8) aus der räumlichen Anordnung der Projektionsvorrichtung (4, 4') und des Sensors (2, 2') relativ zu dem Auslaufbereich (18) sowie aus dem Oberflächenbereich (7, 7', 7") mit dem darauf projizierten Lichtmuster (3, 3', 3", 3‴) die geometrischen Abmessungen des Metallstranges (6, 6', 6") an einer Vielzahl von Positionen entlang der Längsrichtung (X_{S}, X_{S}', X_{S}") ermittelt wird, und
- wobei mittels der Auswerteeinheit (8) individuelle Texturen auf dem Metallstrang (6, 6', 6") in zwei oder mehreren Bildern der Sequenz (20, 20', 20") identifiziert werden, deren relative Bildposition in den zwei oder mehreren aufeinanderfolgenden Bildern ermittelt und daraus sowie aus einer Bildfrequenz und einem Abbildungsmaßstab des betreffenden Sensors (2, 2') eine Geschwindigkeit (V_{S}, V_{S}', V_{S}") des Metallstranges (6, 6', 6") relativ zu dem Sensor (2, 2') in Produktionsrichtung (X) mittels eines korrelativen optischen Messverfahrens ermittelt wird.

6. Verfahren nach Anspruch 5,
- wobei mittels der Projektionsvorrichtung (2, 2') das Lichtmuster (3, 3', 3", 3‴) mittels zumindest einer, bevorzugt zumindest zweier Lichtquellen (5, 5', 5", 5‴) projiziert wird,
- wobei von der Lichtquelle (5, 5', 5", 5‴) Licht in einem Wellenlängenbereich von 370nm bis 550nm, bevorzugt 430nm bis 520nm, emittiert wird,
- wobei mittels eines elektronischen Farbsensors (2, 2') die Sequenz (20, 20', 20") generiert wird, und
- wobei nur ein Grün- und/oder ein Blaukanal der von dem Sensor (2, 2') generierten Bilder der Sequenz (20, 20', 20") zur Detektion des Lichtmusters (3, 3', 3", 3‴) herangezogen wird.

7. Verfahren nach einem der Ansprüche 5 oder 6, wobei die Bilder der Sequenz (20, 20', 20") mit einer Frequenz von mindestens 1Hz, bevorzugt mindestens 5Hz, generiert werden.

8. Verfahren nach einem der Ansprüche 5 bis 7, wobei mittels der Projektionsvorrichtung (4, 4') genau ein Lichtmuster (3, 3', 3", 3‴) auf jeden Metallstrang (6, 6', 6") projiziert wird und wobei zur Ermittlung der geometrischen Abmessungen des Metallstranges (6, 6', 6") eine Punktsymmetrie des Metallstranges (6, 6', 6") in einer Ebene normal zu seiner Längsrichtung (X_{S}, X_{S}', X_{S}") angenommen wird.

9. Verfahren nach einem der Ansprüche 5 bis 8, wobei mittels zumindest zweier Projektionsvorrichtungen (4, 4') zwei Lichtmuster (3, 3', 3", 3‴) aus unterschiedlichen räumlichen Richtungen auf zumindest einen Metallstrang (6, 6', 6") projiziert werden und wobei mittels zumindest zweier Sensoren (2, 2') jeweils ein Oberflächenbereich (7, 7', 7", 7‴) von dem zumindest einen Metallstrang (6, 6', 6") aus verschiedenen räumlichen Perspektiven erfasst wird.

10. Verfahren nach einem der Ansprüche 5 bis 9, wobei aus der Geschwindigkeit (V_{S}, V_{S}', V_{S}") anhand eines von der Auswerteeinheit detektierten Trennschnittes des Metallstranges (6, 6', 6") eine Länge und ein Gewicht des Metallstranges (6, 6', 6") ermittelt werden.

11. Verfahren nach einem der Ansprüche 5 bis 9, wobei aus der Geschwindigkeit (V_{S}, V_{S}', V_{S}") anhand eines externen, einen erfolgten Trennschnitt des Metallstranges (6, 6', 6") anzeigenden und an die Auswerteeinheit (8) übermittelten Signals eine Länge und ein Gewicht des Metallstranges (6, 6', 6") ermittelt werden.

## Claims

1. A device (1) for contactless measuring of at least one, preferably at least two metal strands (6, 6', 6"), moving along a production direction (X) of a continuous casting plant (11) through an outlet area (18) of the continuous casting plant (11), in particular in the billet or bloom format,
- the device (1) comprising at least one, preferably at least two projection devices (4, 4'), at least one, preferably at least two sensors (2, 2'), and an evaluation unit (8),
- wherein the projection device (4, 4') is configured to project at least one, preferably at least two light patterns (3, 3', 3", 3‴) on the metal strand (6, 6', 6"),
- wherein the sensor (2, 2') is arrangeable at a height (h) above the outlet area (18) and is configured to generate a time sequence (20, 20', 20") of two-dimensional images and transmit it to the evaluation unit (8),
- wherein the sensor (2, 2') is configured to acquire a surface area (7, 7', 7", 7‴) of the metal strand (6, 6', 6"), having the light pattern (3, 3', 3", 3‴) projected thereon, extending along a longitudinal direction (X_{S}, X_{S}', X_{S}") of the metal strand (6, 6', 6") and in a plane normal to the longitudinal direction (X_{S}, X_{S}', X_{S}"),
- wherein the evaluation unit (8) is configured to detect the surface area (7, 7', 7", 7‴) and the light pattern (3, 3', 3", 3‴) projected thereon in the single images of the sequence (20, 20', 20"),
- wherein the evaluation unit (8) is configured, from the spatial arrangement of the projection device (4, 4') and the sensor (2, 2') relative to the outlet area (18) and from the surface area (7, 7', 7", 7‴) and the light pattern (3, 3', 3", 3‴) projected thereon, to determine the geometric dimensions of the metal strand (6, 6', 6") at a large number of positions along the longitudinal direction (X_{S}, X_{S}', X_{S}") of the metal strand (6, 6', 6") in the production direction (X),
- wherein the evaluation unit (8) is configured to identify individual textures on the metal strand (6, 6', 6") in two or more images of the sequence (20, 20', 20"), determine the relative image position in the two or more successive images, and, therefrom and from an image frequency and an imaging scale of the relevant sensor (2, 2'), to determine a velocity (V_{S}, V_{S}', V_{S}") of the metal strand (6, 6', 6") relative to the sensor (2, 2') in the production direction (X) on the basis of a correlative optical measuring method, and
- wherein the projection device (4, 4') is arrangeable at a horizontal distance (d) to the sensor (2, 2').

2. The device (1) as claimed in claim 1, wherein the projection device (4, 4') for projecting the light pattern (3, 3', 3", 3‴) has at least one, preferably at least two light sources (5, 5', 5", 5‴), which are configured for emitting light in a wavelength range from 370 nm to 550 nm, preferably 430 nm to 520 nm, and wherein the sensor (2, 2') is designed as an electronic sensor for generating two-dimensional color images.

3. The device (1) as claimed in claim 1 or 2, wherein the projection device (4, 4') is arrangeable such that the light pattern (3, 3', 3", 3‴) is projectable in the production direction (X) after a severing device (19) of the continuous casting plant (11) on the metal strand (6, 6', 6") .

4. The device (1) as claimed in claim 1 or 2, wherein the projection device (4, 4') is arrangeable such that the light pattern (3, 3', 3", 3‴) is projectable in the production direction (X) before a severing device (19) of the continuous casting plant (11) on the metal strand (6, 6' , 6").

5. A method for contactless measuring of at least one, preferably at least two metal strands (6, 6', 6") moving along a production direction (X) of a continuous casting plant (11) through an outlet area (18) of the continuous casting plant (11), in particular in billet or bloom format,
- wherein by means of at least one, preferably at least two projection devices (4, 4'), at least one, preferably at least two light patterns (3, 3', 3", 3‴) are projected on the metal strand (6, 6', 6"),
- wherein by means of at least one, preferably at least two sensors (2, 2'), a time sequence (20, 20', 20") of two-dimensional images is generated and transmitted to an evaluation unit (8),
- wherein the projection device (4, 4') is arranged at a horizontal distance (d) to the sensor (2, 2')
- wherein a surface area (7, 7', 7", 7‴) of the metal strand (6, 6', 6"), having the light pattern (3, 3', 3", 3‴) projected thereon, extending along a longitudinal direction (X_{S}, X_{S}', X_{S}") of the metal strand (6, 6', 6") and in a plane normal to the longitudinal direction (X_{S}, X_{S}', X_{S}"), is acquired by the sensor (2, 2'),
- wherein the surface area (7, 7', 7", 7‴) and the light pattern (3, 3', 3", 3‴) projected thereon in the single images of the sequence (20, 20', 20") is detected by means of the evaluation unit (8),
- wherein, from the spatial arrangement of the projection device (4, 4') and the sensor (2, 2') relative to the outlet area (18) and from the surface area (7, 7', 7", 7‴) and the light pattern (3, 3', 3", 3‴) projected thereon, the geometric dimensions of the metal strand (6, 6', 6") at a large number of positions along the longitudinal direction (X_{S}, X_{S}', X_{S}") of the metal strand (6, 6', 6") in the production direction (X) are determined by means of the evaluation unit (8), and
- wherein individual textures on the metal strand (6, 6', 6") in two or more images of the sequence (20, 20', 20") are identified, the relative image position in the two or more successive images are determined, and, therefrom and from an image frequency and an imaging scale of the relevant sensor (2, 2'), a velocity (V_{S}, V_{S}', V_{S}") of the metal strand (6, 6', 6") relative to the sensor (2, 2') in the production direction (X) is determined by means of a correlative optical measuring method by means of the evaluation unit (8).

6. The method as claimed in claim 5,
- wherein the light pattern (3, 3', 3", 3‴) is projected by means of at least one, preferably at least two light sources (5, 5', 5", 5‴) by means of the projection device (2, 2'),
- wherein light is emitted in a wavelength range from 370 nm to 550 nm, preferably 430 nm to 520 nm, by the light source (5, 5', 5", 5‴),
- wherein the sequence (20, 20', 20") is generated by means of an electronic color sensor (2, 2'), and
- wherein only a green and/or a blue channel of the images of the sequence (20, 20', 20") generated by the sensor (2, 2') are used for detecting the light pattern (3, 3', 3", 3‴).

7. The method as claimed in one of claims 5 or 6, wherein the images of the sequence (20, 20', 20") are generated at a frequency of at least 1 Hz, preferably at least 5 Hz.

8. The method as claimed in any one of claims 5 to 7, wherein by means of the projection device (4, 4'), precisely one light pattern (3, 3', 3", 3‴) is projected on each metal strand (6, 6', 6") and wherein to determine the geometric dimensions of the metal strand (6, 6', 6"), a point symmetry of the metal strand (6, 6', 6") in a plane normal to its longitudinal direction (X_{S}, X_{S}', X_{S}") is assumed.

9. The method as claimed in any one of claims 5 to 8, wherein by means of at least two projection devices (4, 4'), two light patterns (3, 3', 3", 3‴) are projected from different spatial directions onto the at least one metal strand (6, 6', 6") and wherein by means of at least two sensors (2, 2') in each case one surface area (7, 7', 7", 7‴) of the at least one metal strand (6, 6', 6") is acquired from different spatial perspectives.

10. The method as claimed in any one of claims 5 to 9, wherein a length and a weight of the metal strand (6, 6', 6") are determined from the velocity (V_{S}, V_{S}', V_{S}") on the basis of a severing cut of the metal strand (6, 6', 6") detected by the evaluation unit.

11. The method as claimed in any one of claims 5 to 9, wherein a length and a weight of the metal strand (6, 6', 6") are determined from the velocity (V_{S}, V_{S}', V_{S}") on the basis of an external signal that indicates a completed severing cut of the metal strand (6, 6', 6") and is transmitted to the evaluation unit (8).

## Revendications

1. Dispositif (1) de mesure sans contact d'au moins une, de préférence d'au moins deux barres métalliques (6, 6', 6") mobiles le long d'une direction de production (X) d'une installation de coulée continue (11) à travers une zone de décharge (18) de l'installation de coulée continue (11), en particulier sous forme de billettes ou de blooms,
- le dispositif (1) comprenant au moins un, de préférence au moins deux dispositifs de projection (4, 4'), au moins un, de préférence au moins deux capteurs (2, 2') et une unité d'évaluation (8),
- dans lequel le dispositif de projection (4, 4') est configuré pour projeter au moins un, de préférence au moins deux motifs lumineux (3, 3', 3", 3‴) sur la barre métallique (6, 6', 6"),
- dans lequel le capteur (2, 2') peut être disposé à une hauteur (h) supérieure à la zone de décharge (18) et est configuré pour générer une séquence temporelle (20, 20', 20") d'images bidimensionnelles et la transmettre à l'unité d'évaluation (8),
- dans lequel le capteur (2, 2') est configuré pour détecter une zone surfacique (7, 7', 7", 7‴) de la barre métallique (6, 6', 6") s'étendant le long d'une direction longitudinale (X_{S}, X_{S}', X_{S}") de la barre métallique (6, 6', 6") et dans un plan normal à la direction longitudinale (X_{S}, X_{S}', X_{S}") avec le motif lumineux projeté dessus (3, 3', 3", 3‴),
- dans lequel l'unité d'évaluation (8) est configurée pour détecter la zone surfacique (7, 7', 7", 7‴) et le motif lumineux projeté dessus (3, 3', 3", 3‴) dans chaque image de la séquence (20, 20', 20"),
- dans lequel l'unité d'évaluation (8) est configurée pour déterminer les dimensions géométriques de la barre métallique (6, 6', 6") à partir de la disposition spatiale du dispositif de projection (4, 4') et du capteur (2, 2') par rapport à la zone de décharge (18) ainsi que de la zone surfacique (7, 7', 7", 7‴) et du motif lumineux projeté dessus (3, 3', 3", 3‴) en une pluralité de positions le long de la direction longitudinale (X_{S}, X_{S}', X_{S}") de la barre métallique (6, 6', 6"),
- dans lequel l'unité d'évaluation (8) est configurée pour identifier des textures individuelles sur la barre métallique (6, 6', 6") dans au moins deux images de la séquence (20, 20', 20"), pour déterminer leur position d'image relative dans au moins deux images consécutives et pour déterminer, à partir de là ainsi que d'une fréquence d'images et d'un grossissement du capteur concerné (2, 2'), une vitesse (V_{S}, V_{S}', V_{S}") de la barre métallique (6, 6', 6") par rapport au capteur (2, 2') dans la direction de production (X) au moyen d'un procédé de mesure optique corrélatif, et
- dans lequel le dispositif de projection (4, 4') peut être disposé à un intervalle horizontal (d) du capteur (2, 2').

2. Dispositif (1) selon la revendication 1, dans lequel le dispositif de projection (4, 4') pour la projection du motif lumineux (3, 3', 3", 3‴) présente au moins une, de préférence deux sources lumineuses (5, 5', 5", 5‴) conçues pour l'émission de lumière dans une gamme de longueurs d'onde de 370 nm à 550 nm, de préférence de 430 nm à 520 nm, et dans lequel le capteur (2, 2') est conçu comme un capteur électronique pour créer des images colorées en deux dimensions.

3. Dispositif (1) selon la revendication 1 ou 2, dans lequel le dispositif de projection (4, 4') peut être disposé de telle sorte que le motif lumineux (3, 3', 3", 3"') puisse être projeté dans la direction de production (X) derrière un dispositif de séparation (19) de l'installation de coulée continue (11) sur la barre métallique (6, 6', 6").

4. Dispositif (1) selon la revendication 1 ou 2, dans lequel le dispositif de projection (4, 4') peut être disposé de telle sorte que le motif lumineux (3, 3', 3", 3"') puisse être projeté dans la direction de production (X) devant un dispositif de séparation (19) de l'installation de coulée continue (11) sur la barre métallique (6, 6', 6").

5. Procédé de mesure sans contact d'au moins une, de préférence d'au moins deux barres métalliques (6, 6', 6") mobiles le long d'une direction de production (X) d'une installation de coulée continue (11) à travers une zone de décharge (18) de l'installation de coulée continue (11), en particulier sous forme de billettes ou de blooms,
- dans lequel au moins un, de préférence au moins deux motifs lumineux (3, 3', 3", 3‴) sont projetés sur la barre métallique (6, 6', 6") au moyen d'au moins un, de préférence d'au moins deux dispositifs de projection (4, 4'),
- dans lequel une séquence temporelle (20, 20', 20") d'images bidimensionnelles est générée au moyen d'au moins deux capteurs (2, 2') et transmise à une unité d'évaluation (8),
- dans lequel le dispositif de projection (4, 4') est disposé à un intervalle horizontal (d) du capteur (2, 2'),
- dans lequel une zone surfacique (7, 7', 7", 7‴) de la barre métallique (6, 6', 6") s'étendant le long d'une direction longitudinale (X_{S}, X_{S}', X_{S}") de la barre métallique (6, 6', 6") et dans un plan normal à la direction longitudinale (X_{S}, X_{S}', X_{S}") avec le motif lumineux projeté dessus (3, 3', 3", 3"') est détectée par le capteur (2, 2'),
- dans lequel la zone surfacique (7, 7', 7", 7‴) et le motif lumineux projeté dessus (3, 3', 3", 3‴) sont détectés au moyen de l'unité d'évaluation (8) dans chaque image de la séquence (20, 20', 20"),
- dans lequel les dimensions géométriques de la barre métallique (6, 6', 6") sont déterminées au moyen de l'unité d'évaluation (8) à partir de la disposition spatiale du dispositif de projection (4, 4') et du capteur (2, 2') par rapport à la zone de décharge (18) ainsi que de la zone surfacique (7, 7', 7") avec le motif lumineux projeté dessus (3, 3', 3", 3"'), au niveau d'une pluralité de positions le long de la direction longitudinale (X_{S}, X_{S}', X_{S}"), et
- dans lequel l'unité d'évaluation (8) est configurée pour identifier des textures individuelles sur la barre métallique (6, 6', 6") dans au moins deux images de la séquence (20, 20', 20"), pour déterminer leur position d'image relative dans au moins deux images consécutives et pour déterminer, à partir de là ainsi que d'une fréquence d'images et d'un grossissement du capteur concerné (2, 2'), une vitesse (V_{S}, V_{S}', V_{S}") de la barre métallique (6, 6', 6") par rapport au capteur (2, 2') dans la direction de production (X) au moyen d'un procédé de mesure optique corrélatif.

6. Procédé selon la revendication 5,
- dans lequel le motif lumineux (3, 3', 3", 3‴) est projeté au moyen du dispositif de projection (2, 2') au moyen d'au moins un, de préférence d'au moins deux sources lumineuses (5, 5', 5", 5‴),
- dans lequel de la lumière en provenance de la source lumineuse (5, 5', 5", 5‴) est émise dans une gamme de longueurs d'onde de 370 nm à 550 nm, de préférence de 430 nm à 520 nm,
- dans lequel la séquence (20, 20', 20") est générée au moyen d'un capteur de couleurs électronique (2, 2'), et
- dans lequel seul un canal vert et/ou un canal bleu des images générées par le capteur (2, 2') de la séquence (20, 20', 20") est extrait pour la détection du motif lumineux (3, 3', 3", 3‴).

7. Procédé selon l'une des revendications 5 ou 6, dans lequel les images de la séquence (20, 20', 20") sont générées avec une fréquence d'au moins 1 Hz, de préférence d'au moins 5 Hz.

8. Procédé selon l'une des revendications 5 à 7, dans lequel exactement un motif lumineux (3, 3', 3", 3‴) est projeté sur chaque barre métallique (6, 6', 6") au moyen du dispositif de projection (4, 4') et où l'on suppose un point de symétrie de la barre métallique (6, 6', 6") dans un plan normal à sa direction longitudinale (X_{S}, X_{S}', X_{S}") pour déterminer les dimensions géométriques de la barre métallique (6, 6', 6").

9. Procédé selon l'une des revendications 5 à 8, dans lequel deux motifs lumineux (3, 3', 3", 3‴) sont projetés depuis deux directions spatiales différentes sur au moins une barre métallique (6, 6', 6") au moyen d'au moins deux dispositifs de projection (4, 4') et où une zone surfacique respective (7, 7', 7", 7‴) de l'au moins une barre métallique (6, 6', 6") est saisie depuis différentes perspectives spatiales au moyen d'au moins deux capteurs (2, 2').

10. Procédé selon l'une des revendications 5 à 9, dans lequel sont déterminés une longueur et un poids de la barre métallique (6, 6', 6") à partir de la vitesse (V_{S}, V_{S}', V_{S}") au moyen d'une section de séparation de la barre métallique (6, 6', 6") détectée par l'unité d'évaluation.

11. Procédé selon l'une des revendications 5 à 9, dans lequel sont déterminés une longueur et un poids de la barre métallique (6, 6', 6") à partir de la vitesse (V_{S}, V_{S}', V_{S}") au moyen d'un signal indiquant une section de séparation externe réalisée dans la barre métallique (6, 6', 6") et transmis à l'unité d'évaluation (8).
